# EUROPEAN PATENT APPLICATION

(11) **EP 4 300 455 A1**
(43) Date of publication of application: **03.01.2024**
(21) Application number: 22759467.8
(22) Date of filing: 17.02.2022
(51) Int. Cl.: G08B 21/00, H02J 50/20, H02J 50/60, H02J 50/80

(54) **POWER TRANSMISSION DEVICE, POWER TRANSMISSION CONTROL METHOD, POWER TRANSMISSION CONTROL PROGRAM, POWER TRANSMISSION CONTROL DEVICE, AND WIRELESS POWER SUPPLY SYSTEM**

(30) Priority: 24.02.2021 JP 2021026925
(71) Applicant: Space Power Technologies Inc., Kyoto-shi, Kyoto 615-8245 (JP)
(72) Inventor: TAKABAYASHI Nobuyuki, Kyoto-shi, Kyoto 615-8245 (JP); FURUKAWA Minoru, Kyoto-shi, Kyoto 615-8245 (JP)
(74) Representative: AWA Sweden AB
(86) International application number: PCT/JP2022/006284
(87) International publication number: WO 2022/181428

(57) **Abstract**

A power transmission apparatus according to an aspect of the present disclosure includes a control unit that controls a power transmitting unit that performs wireless power transmission, the control unit including: means for identifying dynamic information related to a power receiving surface that corresponds to a power receiving unit included in a target power reception apparatus; means for identifying static information related to the power receiving surface; means for generating a control parameter related to a radiation direction and a beam shape of a power transmission beam for supplying electrical power to the target power reception apparatus by referring to the dynamic information related to the power receiving surface and the static information related to the power receiving surface; means for causing the power transmitting unit to radiate the power transmission beam in accordance with the control parameter; means for referring to a position of an edge in an image obtained by photographing a periphery of the target power reception apparatus and monitoring entry of a biological body or an object with respect to a no-entry region that is created in a periphery of a path of the power transmission beam; and means for stopping radiation of the power transmission beam when entry of a biological body or an object with respect to the no-entry region is detected.

## Description

### [TECHNICAL FIELD]

The present disclosure relates to a power transmission apparatus, a power transmission control method, a power transmission control program, a power transmission control apparatus, and a wireless power supply system.

### [BACKGROUND ART]

In the field of wireless power supply, there is a demand for realizing highly efficient power transmission.

Patent Literature 1 describes a technique which aims to realize highly efficient wireless power supply with high power reception efficiency with respect to flying objects.

### [CITATION LIST]

### [PATENT LITERATURE]

[Patent Literature 1]
Japanese Patent Laid-Open No. 2019-135900

### [SUMMARY OF INVENTION]

### [TECHNICAL PROBLEM]

In the technique described in Patent Literature 1, since a power reception apparatus is a flying object such as a high-altitude platform station (HAPS), an assumption can be made that a biological body or an object is not present in a periphery of the flying object.

On the other hand, for example, when the power reception apparatus is a smartphone placed on an indoor table, there is a possibility that a biological body (for example, an owner of the smartphone) is present in a periphery of the smartphone. It is not desirable for a biological body to be exposed to a power transmission beam with high power. Therefore, in a situation where a biological body or an object (for example, electronic equipment) is present in a periphery of the power reception apparatus, safety of the biological body or the object must be secured by appropriately controlling the power transmission beam.

An object of the present disclosure is to increase transmission efficiency while securing safety of a periphery of a power reception apparatus in wireless power supply.

### [SOLUTION TO PROBLEM]

A power transmission apparatus according to an aspect of the present disclosure includes a control unit that controls a power transmitting unit that performs wireless power transmission, the control unit including: means for identifying dynamic information related to a power receiving surface that corresponds to a power receiving unit included in a target power reception apparatus; means for identifying static information related to the power receiving surface; means for generating a control parameter related to a radiation direction and a beam shape of a power transmission beam for supplying electrical power to the target power reception apparatus by referring to the dynamic information related to the power receiving surface and the static information related to the power receiving surface; means for causing the power transmitting unit to radiate the power transmission beam in accordance with the control parameter; means for referring to a position of an edge in an image obtained by photographing a periphery of the target power reception apparatus and monitoring entry of a biological body or an object with respect to a no-entry region that is created in a periphery of a path of the power transmission beam; and means for stopping radiation of the power transmission beam when entry of a biological body or an object with respect to the no-entry region is detected.

### [ADVANTAGEOUS EFFECTS OF INVENTION]

According to the present disclosure, transmission efficiency can be increased while securing safety of a periphery of a power reception apparatus in wireless power supply.

### [BRIEF DESCRIPTION OF DRAWINGS]

[Figure 1] Figure 1 is a block diagram showing a configuration of a wireless power supply system according to a present embodiment.
[Figure 2] Figure 2 is a block diagram illustrating a configuration of a power transmission apparatus.
[Figure 3] Figure 3 is a block diagram illustrating a configuration of an input device.
[Figure 4] Figure 4 is a diagram illustrating a power transmitting surface corresponding to a power transmitting unit illustrated in Figure 2.
[Figure 5] Figure 5 is a block diagram illustrating a configuration of a power reception apparatus.
[Figure 6] Figure 6 is a diagram illustrating a power receiving surface corresponding to a power receiving unit illustrated in Figure 5.
[Figure 7] Figure 7 is a diagram showing an implementation example of the wireless power supply system according to a present embodiment.
[Figure 8] Figure 8 is a diagram showing a power receiving surface shown in Figure 7 when viewed from above.
[Figure 9] Figure 9 is a diagram showing a situation where a user brings a hand close in the implementation example shown in Figure 7.
[Figure 10] Figure 10 is a diagram showing a power receiving surface shown in Figure 9 when viewed from above.
[Figure 11] Figure 11 is a diagram showing an overview of the present embodiment.
[Figure 12] Figure 12 is a diagram showing a data structure of a stoppage history database according to the present embodiment.
[Figure 13] Figure 13 is a flow chart illustrating power transmission control processing according to the present embodiment.
[Figure 14] Figure 14 is a flow chart illustrating details of step S110 in Figure 13.
[Figure 15] Figure 15 is a diagram illustrating a structure of information received by a power transmission apparatus from a power reception apparatus.
[Figure 16] Figure 16 is a flow chart illustrating details of step S120 in Figure 13.
[Figure 17] Figure 17 is a diagram illustrating an ideal beam shape.
[Figure 18] Figure 18 is a diagram illustrating an ideal beam shape.
[Figure 19] Figure 19 is a flow chart illustrating details of step S150 in Figure 13.
[Figure 20] Figure 20 is a flow chart illustrating power transmission control processing according to a first modification.
[Figure 21] Figure 21 is an explanatory diagram of control with respect to a power transmission beam when an attitude of a power receiving surface changes.
[Figure 22] Figure 22 is a diagram illustrating a data structure of a power receiving unit database according to a second modification.
[Figure 23] Figure 23 is a diagram illustrating a caution region according to a fourth modification.
[Figure 24] Figure 24 is an explanatory diagram of a measurement technique of distance using a monocular camera.
[Figure 25] Figure 25 is an explanatory diagram of a measurement technique of distance using a monocular camera.

### [DESCRIPTION OF EMBODIMENT]

Hereinafter, an embodiment of the present invention will be described in detail with reference to the drawings. Note that in the drawings for describing the embodiment, as a general rule, same constituent elements will be denoted by same reference signs and repetitive descriptions of such constituent elements will be omitted.

### (1) Configuration of wireless power supply system

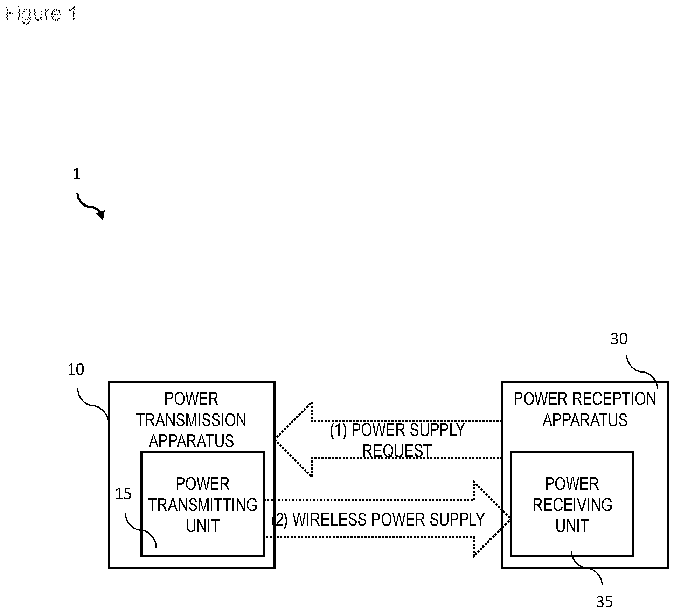

A configuration of a wireless power supply system will be described. Figure 1 is a block diagram showing a configuration of a wireless power supply system according to the present embodiment.

As shown in Figure 1, a wireless power supply system 1 includes a power transmission apparatus 10 and a power reception apparatus 30.

The power transmission apparatus 10 and the power reception apparatus 30 are capable of communicating with each other in a wireless manner. While any wireless communication scheme may be adopted, examples include Bluetooth (registered trademark), ZigBee (registered trademark), specified low-power radio communication, or a wireless local area network (LAN).

In response to a power supply request from the power reception apparatus 30, the power transmission apparatus 10 performs wireless power supply with the power reception apparatus 30 as a target. As an example, the power transmission apparatus 10 is installed in an eating establishment (for example, a cafe or a restaurant) or inside a facility such as a co-working space.

The power reception apparatus 30 includes a battery (not illustrated). The power reception apparatus 30 transmits a power supply request to the power transmission apparatus 10 and charges the battery using energy of a power transmission beam radiated from the power transmission apparatus 10.

The power reception apparatus 30 is any electronic equipment that can be battery-driven. As an example, the power reception apparatus 30 is a mobile computer (for example, a smartphone, a tablet terminal, a laptop computer, or a wearable device), an indicator used for picking work in a warehouse, or a drone.

While one power transmission apparatus 10 and one power reception apparatus 30 are shown in Figure 1, the numbers of the power transmission apparatus 10 and the power reception apparatus 30 are not limited to one.

When there are a plurality of power reception apparatuses 30, each of the power reception apparatuses 30 may include information identifying itself or information identifying an owner of the power reception apparatus 30 in the power supply request. Accordingly, the power transmission apparatus 10 can identify the power reception apparatus 30 (target power reception apparatus) to be a target of wireless power supply.

When there are a plurality of power transmission apparatuses 10, a plurality of power transmission apparatuses 10 among the plurality of power transmission apparatuses 10 may work together to perform wireless power supply or one power transmission apparatus 10 may perform wireless power supply. The power transmission apparatus 10 to perform wireless power supply may be designated by the target power reception apparatus or may be determined by one or more power transmission apparatuses 10 having received a power supply request from the target power reception apparatus.

### (1-1) Configuration of power transmission apparatus

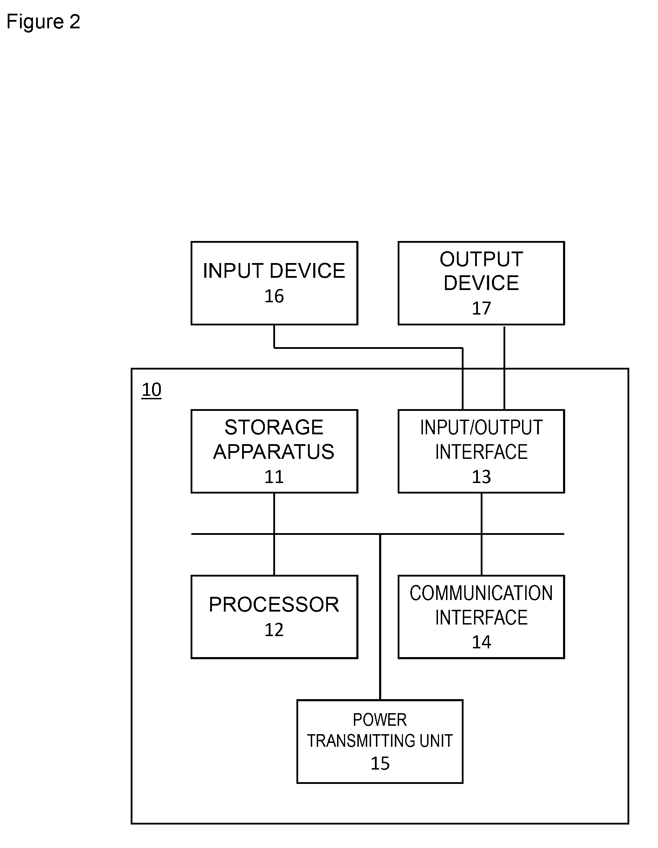

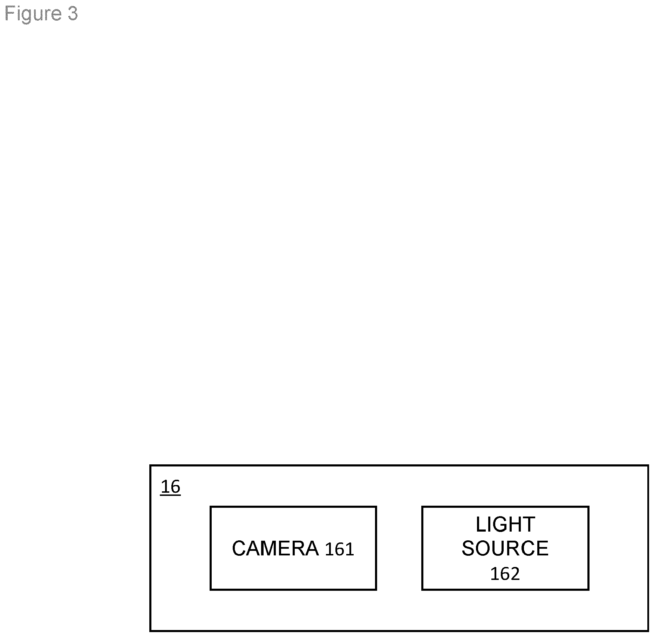

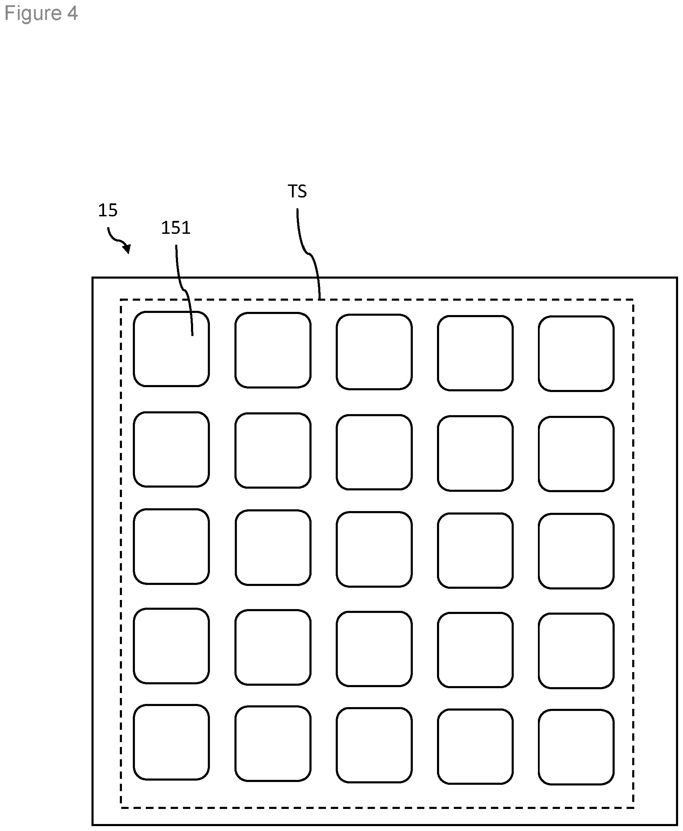

A configuration of the power transmission apparatus 10 will be described. Figure 2 is a block diagram illustrating a configuration of the power transmission apparatus. Figure 3 is a block diagram illustrating a configuration of an input device. Figure 4 is a diagram illustrating a power transmitting surface corresponding to a power transmitting unit illustrated in Figure 2.

As shown in Figure 2, the power transmission apparatus 10 includes a storage apparatus 11, a processor 12, an input/output interface 13, a communication interface 14, and a power transmitting unit 15. The power transmission apparatus 10 can be connected to at least one of an input device 16 and an output device 17.

The storage apparatus 11 is configured to store programs and data. The storage apparatus 11 is, for example, a combination of a read only memory (ROM), a random access memory (RAM), and a storage (for example, a flash memory or a hard disk).

For example, the programs include the following programs.
- A program of an operating system (OS)
- A program of an application for executing information processing (for example, power transmission control processing)

For example, the data includes the following data.
- A database to be referred to in information processing
- Data obtained by executing information processing (in other words, execution results of information processing)

The processor 12 is configured to realize functions of the power transmission apparatus 10 (in particular, a function of controlling the power transmitting unit 15) by running a program stored in the storage apparatus 11. The processor 12 is an example of the computer or the control unit.

The input/output interface 13 is configured to acquire a signal (for example, an instruction by a user, sensing data, or a combination thereof) from the input device 16 connected to the power transmission apparatus 10 and to output a signal to the output device 17 connected to the power transmission apparatus 10.

For example, the input device 16 is a keyboard, a pointing device, a touch screen, a sensor (for example, an optical sensor), or a combination thereof.

For example, the optical sensor can include at least one of the following.
- Camera
- Lidar
- Time of Flight (ToF) camera

As shown in Figure 3, the input device 16 includes a camera 161 and a light source 162.

The camera 161 photographs a periphery of the power reception apparatus 30 in accordance with, for example, a control signal from the processor 12. The camera 161 may be configured so that at least one of a position and an attitude of the camera 161 can be controlled in accordance with a position of the power reception apparatus 30.

The light source 162 illuminates the periphery of the power reception apparatus 30 in accordance with, for example, a control signal from the processor 12. Accordingly, an edge (to be described later) can be more accurately identified from image data photographed by the camera 161. For example, the light source 162 radiates light along a direction of photography of the camera 161. When a monitoring object (for example, a hand of a person) is present within a radiation range of the light, since a part of radiated light is reflected by the monitoring object, a part of the radiated light does not reach a region that is blocked by the monitoring object. In other words, a difference in an amount of reached light is created between the monitoring object and the region blocked by the monitoring object. Therefore, in the image data photographed by the camera 161, brightness of the monitoring object increases while brightness of a periphery of the monitoring object relatively decreases (a shadow is created). Therefore, according to the light source 162, a difference in brightness between the monitoring object and a periphery thereof can be increased and an edge of the monitoring object can be more accurately identified.

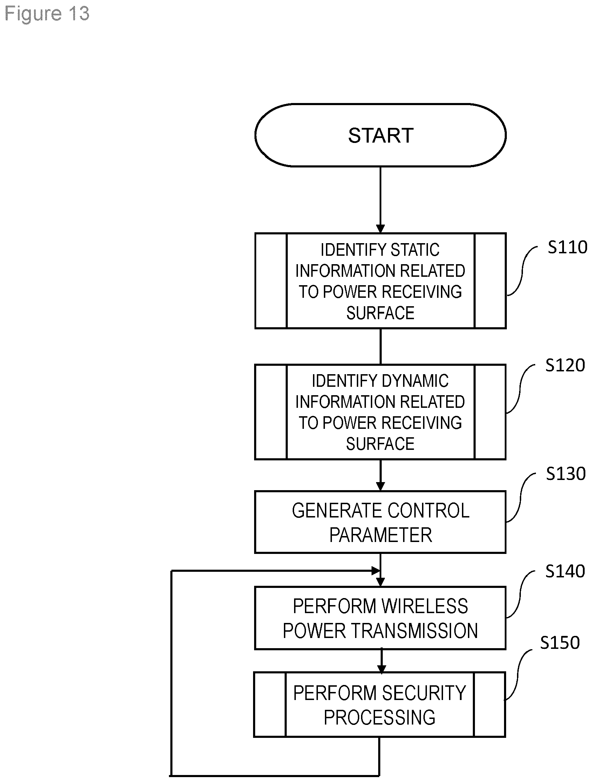

The light source 162 may be configured so that at least one of a position and an attitude of the light source 162 can be controlled in accordance with a position of the power reception apparatus 30. The light source 162 may be turned on in accordance with a start of power transmission control processing (Figure 13) to be described later and turned off in accordance with an end of the processing. Accordingly, a user of a wireless power supply service provided by the power transmission apparatus 10 can be enabled to intuitively recognize a start and an end of power transmission.

For example, the output device 17 is a display, a speaker, an alarm apparatus, or a combination thereof.

When the alarm apparatus receives an alarm output instruction from the power transmission apparatus 10, the alarm apparatus outputs an alarm that is perceivable by people in a periphery of the alarm apparatus. As an example, the alarm is not limited to a sense of vision or a sense of hearing of a person and by stimulating a sense of touch, a sense of smell, or a sense of taste, the alarm enables a worker to perceive at least one of a presence of the alarm itself and contents of the alarm. For example, the alarm apparatus includes a light source, a lamp, an indicator, a projector, a machine that is electrically controllable in its physical state (for example, an electric gate for obstructing passage of people), a smoke-generating apparatus, a speaker, a vibration apparatus, a mist-generating apparatus, an odor-generating apparatus, a taste-stimulating apparatus (for example, a mouthpiece-type device capable of supplying a wearer's tongue with a taste-stimulating solution), or a combination thereof.

The communication interface 14 is configured to control communication between the power transmission apparatus 10 and an external apparatus (for example, the power reception apparatus 30).

As an example, the communication interface 14 is a wireless communication module supporting at least one system of Bluetooth, ZigBee, specified low-power radio communication, and a wireless LAN.

The power transmitting unit 15 is configured to radiate a power-supplying electromagnetic wave as a power transmission beam (in other words, to perform wireless power transmission) in accordance with a control signal from the processor 12. The power-supplying electromagnetic wave is, for example, a microwave, a millimeter wave, or a light wave (laser light or LED light). In the following description, the power-supplying electromagnetic wave is assumed to be a microwave.

More specifically, the power transmitting unit 15 includes a signal source, a signal processing circuit, and an antenna (an example of a "beam-radiating element").

For example, the signal source is an oscillator that generates the power-supplying electromagnetic wave.

For example, the signal processing circuit performs signal processing including at least one of phase adjustment, amplitude adjustment, and filtering with respect to the power-supplying electromagnetic wave generated by the signal source. The signal processing circuit may include an amplifier for amplitude adjustment (power amplification).

The antenna radiates the power-supplying electromagnetic wave output from the signal processing circuit as a power transmission beam into space. A lamp as an alarm apparatus may be mounted in a periphery of the antenna. As an example, by turning on the lamp, people in a periphery of the antenna can be enabled to perceive that wireless power transmission is being executed.

As shown in Figure 4, the power transmitting unit 15 includes a plurality of antennas 151. Each of the antennas 151 may be a planar antenna as shown in Figure 4 or a linear antenna. In addition, the antennas 151 may be arranged in an array as shown in Figure 4 or arranged in a different manner.

The plurality of antennas 151 form a power transmitting surface. The power transmitting surface corresponds to a portion responsible for radiating a power transmission beam among the power transmitting unit 15. The power transmitting surface is dependent on a configuration of the power transmitting unit 15 (for example, sizes, shapes, an arrangement, and the number of the antennas 151). As an example, as shown in Figure 4, a rectangular power transmitting surface TS that contains all of the antennas 151 included in the power transmitting unit 15 may be defined.

### (1-2) Configuration of power reception apparatus

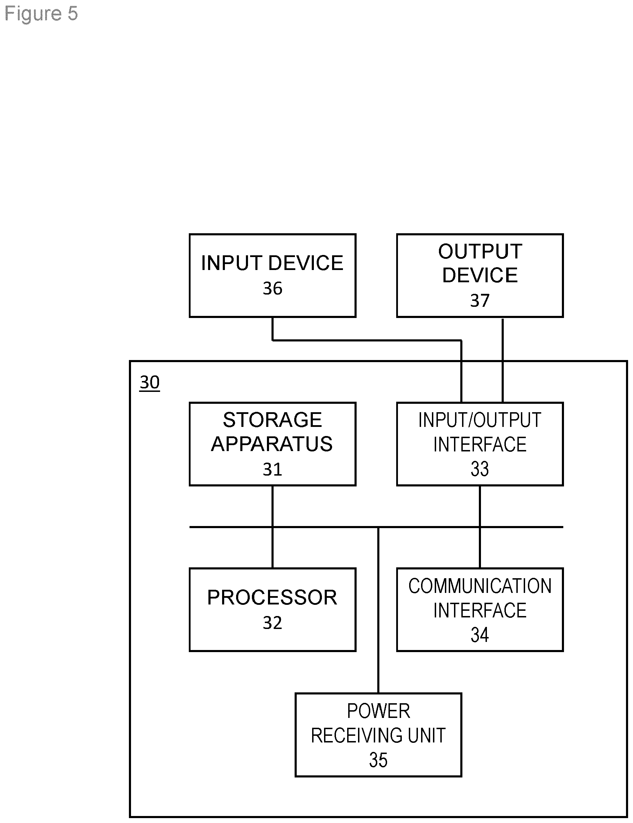

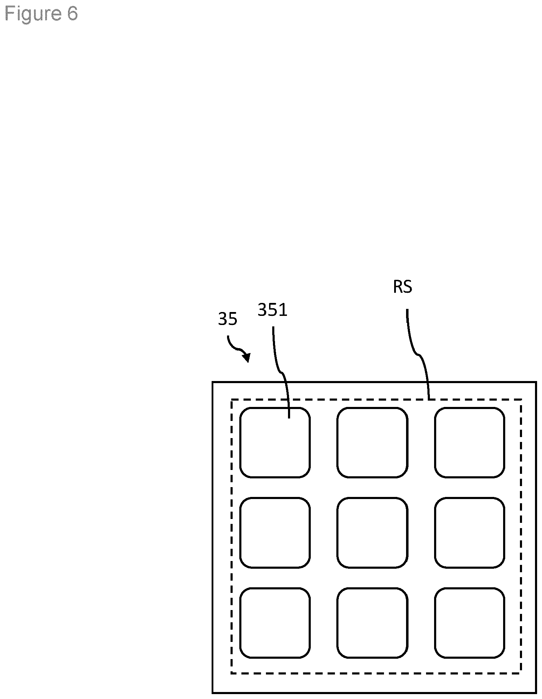

A configuration of the power reception apparatus 30 will be described. Figure 5 is a block diagram illustrating a configuration of the power reception apparatus. Figure 6 is a diagram illustrating a power receiving surface corresponding to a power receiving unit illustrated in Figure 5.

As shown in Figure 5, the power reception apparatus 30 includes a storage apparatus 31, a processor 32, an input/output interface 33, a communication interface 34, and a power receiving unit 35. The power reception apparatus 30 can be connected to at least one of an input device 36 and an output device 37.

The storage apparatus 31 is configured to store programs and data. The storage apparatus 31 is, for example, a combination of a ROM, a RAM, and a storage (for example, a flash memory or a hard disk).

For example, the programs include the following programs.
- A program of an OS
- A program of an application for executing information processing

For example, the data includes the following data.
- A database to be referred to in information processing
- Execution result of information processing

The processor 32 is configured to realize functions of the power reception apparatus 30 by running a program stored in the storage apparatus 31. The processor 32 is an example of the computer.

The input/output interface 33 is configured to acquire a signal (for example, an instruction by a user, sensing data, or a combination thereof) from the input device 36 connected to the power reception apparatus 30. In addition, the input/output interface 33 is configured to output a signal to the output device 37 connected to the power reception apparatus 30.

For example, the input device 36 is a keyboard, a pointing device, a touch screen, a sensor (for example, an attitude sensor), or a combination thereof.

For example, the attitude sensor can include at least one of the following.
- An acceleration sensor
- An angular velocity sensor
- A magnetic sensor

For example, the output device 37 is a display.

The communication interface 34 is configured to control communication between the power reception apparatus 30 and an external apparatus (for example, the power transmission apparatus 10). As an example, the communication interface 34 transmits sensing data to the external apparatus.

For example, the communication interface 34 is a wireless communication module supporting at least one system of Bluetooth, ZigBee, specified low-power radio communication, and a wireless LAN.

The power receiving unit 35 is configured to receive the power transmission beam radiated into space by the power transmitting unit 15 and to obtain electric power.

More specifically, the power receiving unit 35 includes an antenna and a power converter.

The antenna receives a power-supplying electromagnetic wave (power transmission beam) that propagates through space.

The power converter converts the power-supplying electromagnetic wave received by the antenna into (direct-current) power.

When the power-supplying electromagnetic wave is a microwave, the antenna and the power converter may be a rectenna. When the power-supplying electromagnetic wave is a light wave, the antenna and the power converter may be a photoelectric converter.

As shown in Figure 6, the power receiving unit 35 includes a plurality of antennas 351. Each of the antennas 351 may be a planar antenna such as that shown in Figure 6 or a linear antenna. In addition, the antennas 351 may be arranged in an array as shown in Figure 6 or arranged in a different manner.

The plurality of antennas 351 form a power receiving surface (which can also be referred to as an aperture surface). The power receiving surface corresponds to a portion responsible for receiving a power transmission beam among the power receiving unit 35. The power receiving surface is dependent on a configuration of the power receiving unit 35 (for example, sizes, shapes, an arrangement, and the number of the antennas 351). As an example, as shown in Figure 6, a rectangular power receiving surface RS that contains all of the antennas 351 included in the power receiving unit 35 may be defined. The power receiving surface may be an effective aperture surface based on radio wave characteristics of the power receiving unit 35.

Furthermore, the power reception apparatus 30 includes a battery (not illustrated). The battery supplies electric power to each unit of the power reception apparatus 30. The battery is charged by electric power obtained by the power receiving unit 35.

### (2) Overview of embodiment

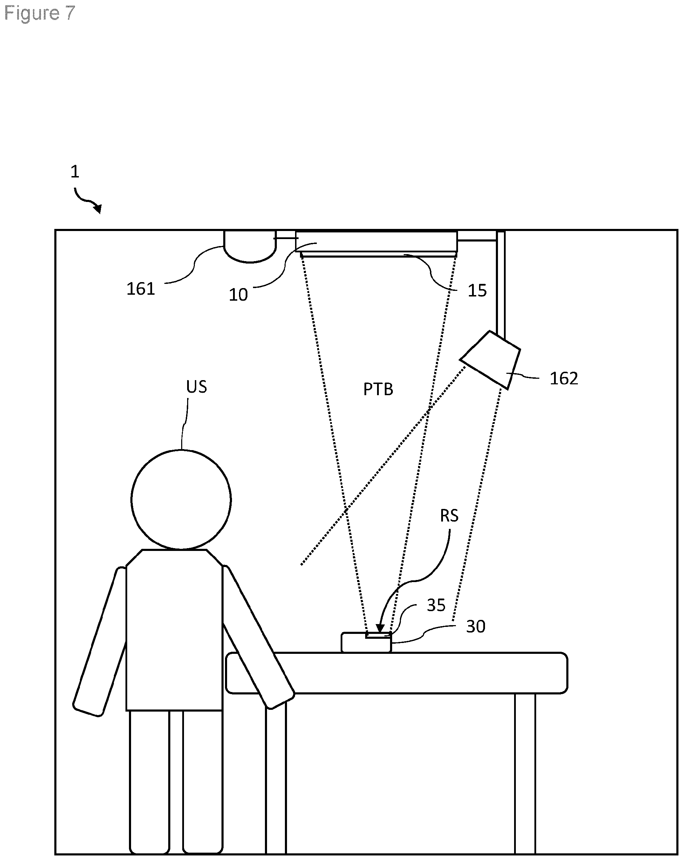

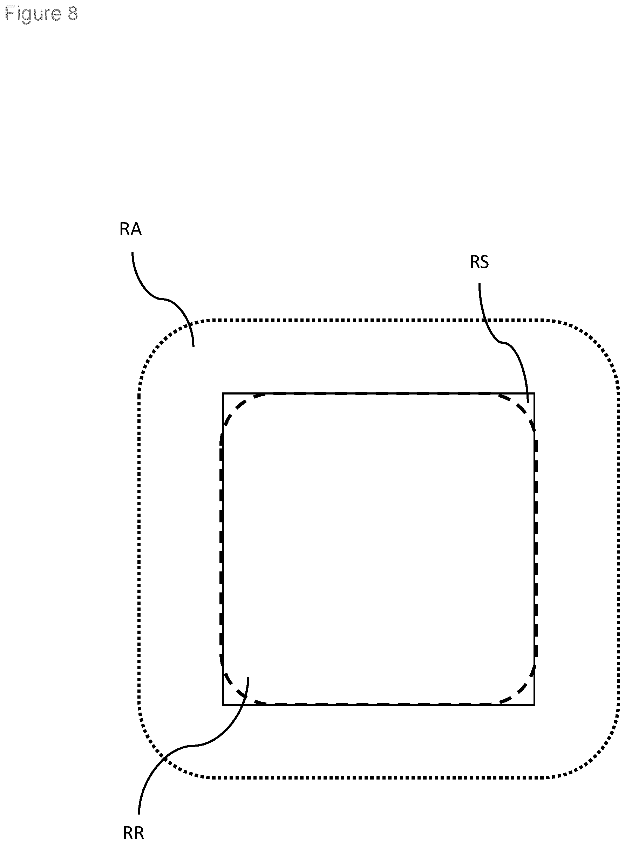

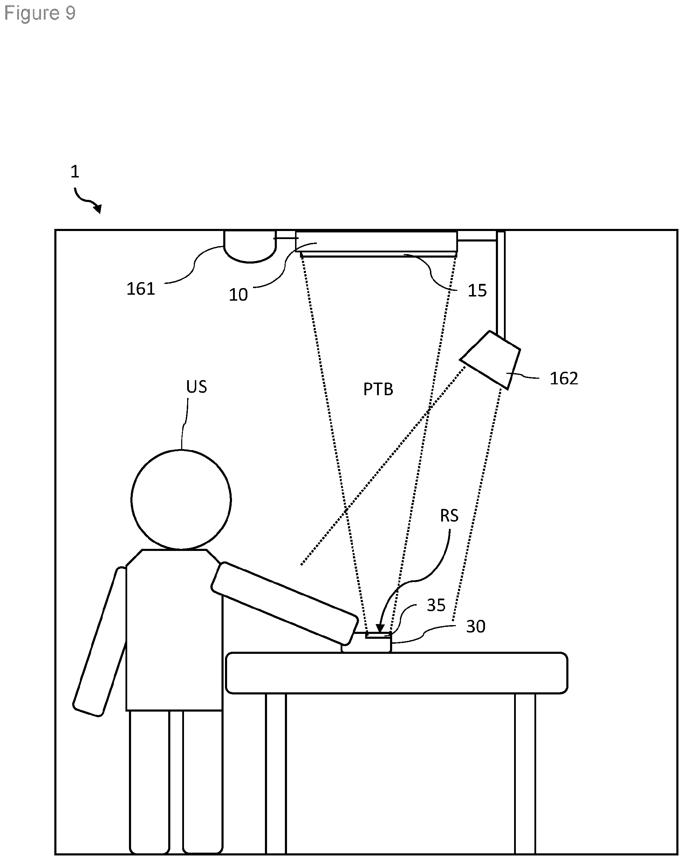

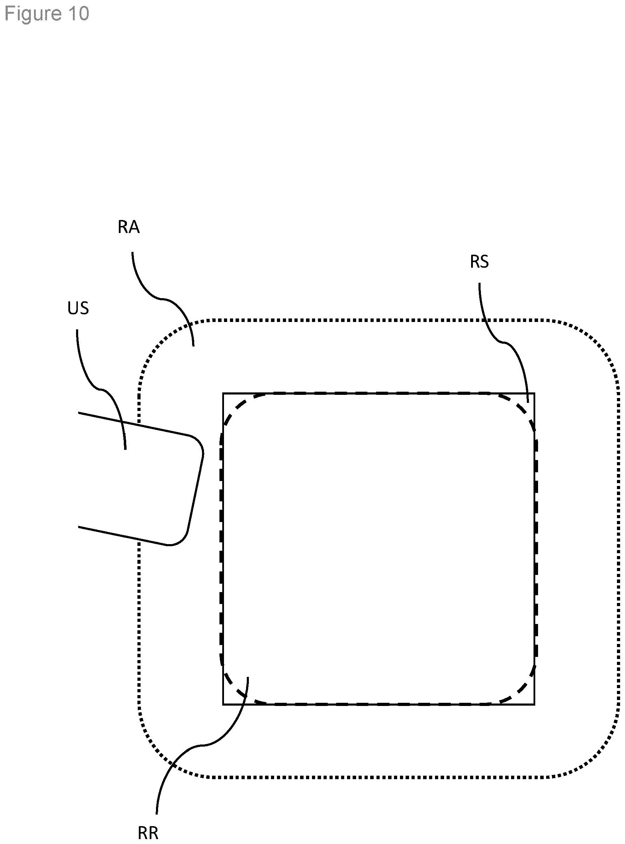

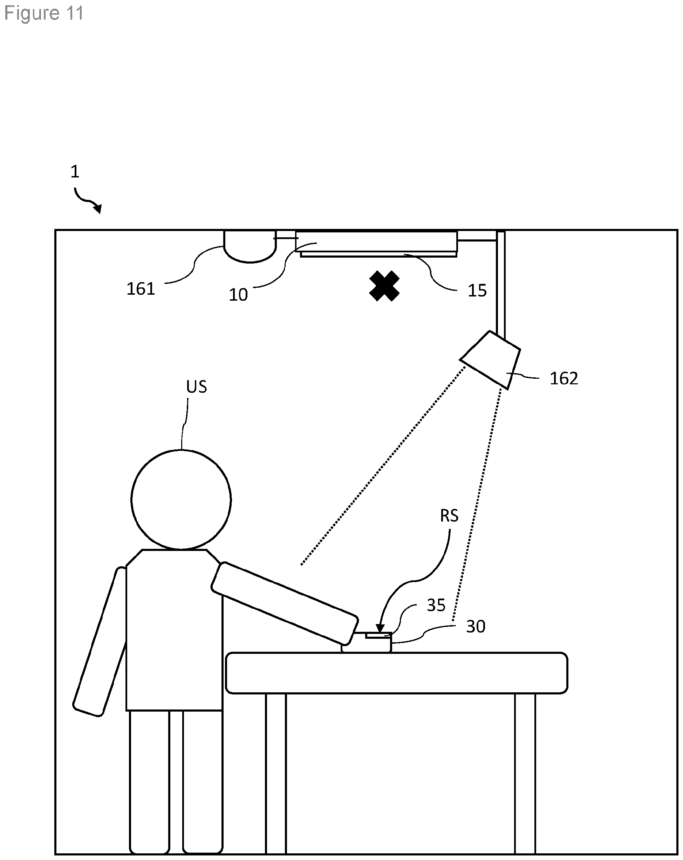

An overview of the present embodiment will be described. Figure 7 is a diagram showing an implementation example of the wireless power supply system according to the present embodiment. Figure 8 is a diagram showing a power receiving surface shown in Figure 7 when viewed from above. Figure 9 is a diagram showing a situation where a user brings a hand close in the implementation example shown in Figure 7. Figure 10 is a diagram showing a power receiving surface shown in Figure 9 when viewed from above. Figure 11 is a diagram showing an overview of the present embodiment.

In addition to the position and the attitude of the power receiving surface corresponding to the power receiving unit 35 included in the power reception apparatus 30, the power transmission apparatus 10 according to the present embodiment identifies a size and a shape of the power receiving surface. As shown in Figure 7, the power transmission apparatus 10 radiates a power transmission beam PTB by adjusting a radiation direction and a shape of the power transmission beam so that the power transmission beam is focused to a spot that conforms to an attitude, a size, and a shape of the power receiving surface at a position of the power receiving surface. As an example, the power transmission apparatus 10 radiates an RF beam in a different phase and a difference amplitude for each of the plurality of antennas 151.

Accordingly, as shown in Figure 8, since a range ("power receiving range") RR in which the power transmission beam PTB can be received on the power receiving surface RS covers an approximately entire region of the power receiving surface RS, a comprehensive power receiving performance of the plurality of antennas 351 included in the power receiving unit 35 can be elicited. In other words, an amount of electric power that can be received per unit time can be increased and highly efficient power transmission can be realized. A region where a biological body or an object is radiated by high electric power is created in a periphery of a path of the power transmission beam PTB (for example, in a periphery of the power receiving range RR). A region where electric power received by a human body from the power transmission beam PTB may possibly equal or exceed a threshold is defined as a no-entry region RA. The threshold is specified based on, for example, "The Protection Policy for the Human Body from Effects of Radio Waves Use".

As shown in Figure 7, the camera 161 photographs a periphery of the power reception apparatus 30. The light source 162 illuminates the periphery of the power reception apparatus 30. The power transmission apparatus 10 acquires image data from the camera 161 and obtains edge information by performing an edge analysis with respect to the image data. The edge information is information related to an edge in an image. An edge is a change point of a brightness of an image (for example, a point where a first order differential of a space function of brightness has a local maximum or a local minimum or a point where a second order differential of the space function of brightness crosses zero).

The power transmission apparatus 10 refers to edge information and monitors entry of a biological body or an object with respect to the no-entry region RA. As an example, when the power transmission apparatus 10 finds an edge in the no-entry region RA, the power transmission apparatus 10 determines that the edge has appeared due to a biological body or an object having entered the no-entry region RA (in other words, the power transmission apparatus 10 determines that a biological body or an object has entered the no-entry region RA). However, even if the power transmission apparatus 10 finds an edge of a predetermined object in the no-entry region RA, the power transmission apparatus 10 can ignore the edge. For example, the predetermined object is the power reception apparatus 30 and property (such as a table, eating utensils, food or beverages, a menu, or a book) that need not be protected from radio waves. When the predetermined object is a stationary object that is present in the no-entry region RA, for example, by registering position information of an edge of the stationary object as a white list before start of wireless power supply, the power transmission apparatus 10 can determine whether or not an edge found inside the no-entry region RA during the wireless power supply can be ignored. Alternatively, the power transmission apparatus 10 may recognize at least one of the predetermined object or another biological body or an object (in other words, a biological body or an object that needs to be protected from radio waves) from image data by image recognition processing. Accordingly, an edge found in the no-entry region RA can be determined to be an edge of an object or a biological body. As shown in Figure 9, let us assume that a user US reaches out a hand toward the power reception apparatus 30. Accordingly, as shown in Figure 10, the hand of the user US enters the no-entry region RA. In this case, the power transmission apparatus 10 performs edge analysis with respect to image data, refers to edge information, and detects entry of the hand of the user US with respect to the no-entry region RA.

In particular, using edge information enables a positional relationship between a biological body or an object and the no-entry region RA to be accurately comprehended. Therefore, even when the biological body or the object and the power reception apparatus 30 coexist in a limited space, wireless power supply can be performed in a proactive manner as long as the biological body or the object is at a safe position, but when the biological body or the object erroneously enters the no-entry region RA, the event can be accurately detected and the power transmission beam can be stopped.

When the power transmission apparatus 10 detects entry of the hand of the user US with respect to the no-entry region RA, the power transmission apparatus 10 stops transmission of the power transmission beam PTB as shown in Figure 11. Accordingly, the power transmission beam can be prevented from radiating the hand of the user US.

### (3) Database

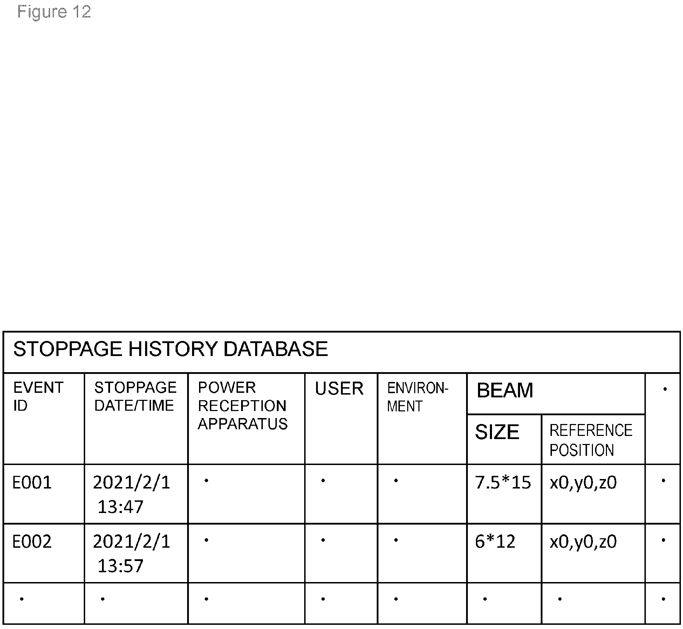

A database according to the present embodiment will be described. Figure 12 is a diagram showing a data structure of a stoppage history database according to the present embodiment.

A transmission stoppage history database is stored in the storage apparatus 11.

The transmission stoppage history database stores transmission stoppage history information. The transmission stoppage history information is information related to a history of events in which radiation of a power transmission beam by the power transmission apparatus 10 has been stopped.

As shown in Figure 12, the stoppage history database includes an event ID field, a stoppage date/time field, a power reception apparatus field, a user field, an environment field, and a beam field. The respective fields are associated with each other.

The event ID field stores an event ID. The event ID is information that identifies an event in which radiation of a power transmission beam by the power transmission apparatus 10 is stopped due to detection of entry of a biological body or an object with respect to a no-entry region.

The stoppage date/time field stores stoppage date/time information. The stoppage date/time information is information related to a date and time at which radiation of a power transmission beam by the power transmission apparatus 10 is stopped.

The power reception apparatus field stores power reception apparatus information. The power reception apparatus information is information related to the power reception apparatus 30. For example, the power reception apparatus information includes at least one of a power reception apparatus ID and power reception apparatus attribute information. The power reception apparatus ID is information that identifies the power reception apparatus 30. The power reception apparatus attribute information is information related to attributes of the power reception apparatus 30. The power reception apparatus attribute information may include at least one of static information of the power reception apparatus 30 and dynamic information of the power reception apparatus 30 at a date and time at which radiation of a power transmission beam by the power transmission apparatus 10 is stopped.

The user field stores user information. The user information is information related to a user of a wireless power supply service that is provided by the power transmission apparatus 10. For example, the user information includes at least one of a user ID and user attribute information. The user ID is information that identifies the user. The user attribute information is information related to attributes of the user.

The environment field stores environmental information. The environmental information is information related to an environment of wireless power supply near a time point at which radiation of a power transmission beam is stopped. For example, environmental information can include information related to the number of biological bodies (for example, the number of customers inside a store or the number of people present together with the user) or the number of objects (for example, the number of items belonging to the user) that are present in a periphery of the power reception apparatus 30. For example, objects present in the periphery of the power reception apparatus 30 may include an information processing apparatus capable of communicating in a wireless manner such as a smartphone, a tablet terminal, or a laptop computer. The power transmission apparatus 10 can recognize a presence of the information processing apparatus by communicating with the information processing apparatus in a wireless manner. Alternatively, the power transmission apparatus 10 may recognize an object or a biological body present within a photographic range by performing image recognition processing with respect to image data photographed by the camera 161. For example, it can be predicted that a probability that the user touches the power reception apparatus 30 is low in an environment where a personal belonging of the user (such as a laptop computer), a meal ordered by the user, or a person accompanying the user is present in the periphery of the power reception apparatus 30.

The beam field stores beam information. The beam information is information related to a state of a power transmission beam (for example, information related to a spot to which the power transmission beam has been focused at a position of a power receiving surface) at a time point where entry of a biological body or an object with respect to the no-entry region is detected. For example, the beam information can include one of or both size information and reference position information. The size information is information related to a size of the spot described above. The reference position information is information related to a reference position of the spot. The reference position is a position of a predetermined point (for example, a center point, a vertex, or a corner) of the spot.

### (4) Power transmission control processing

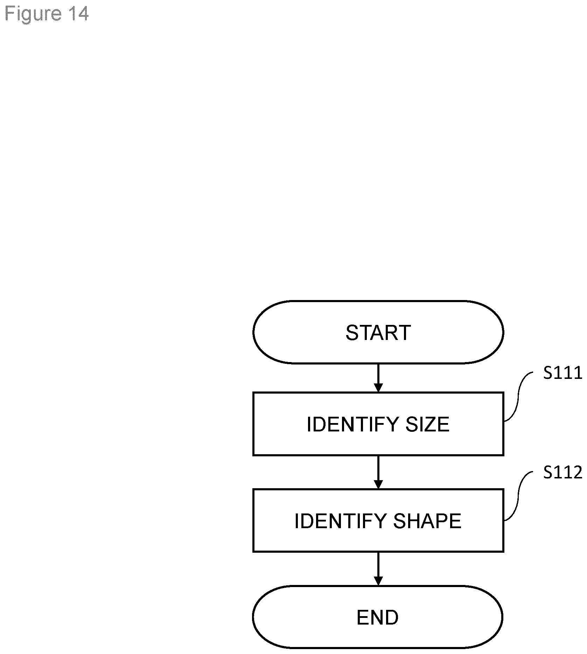

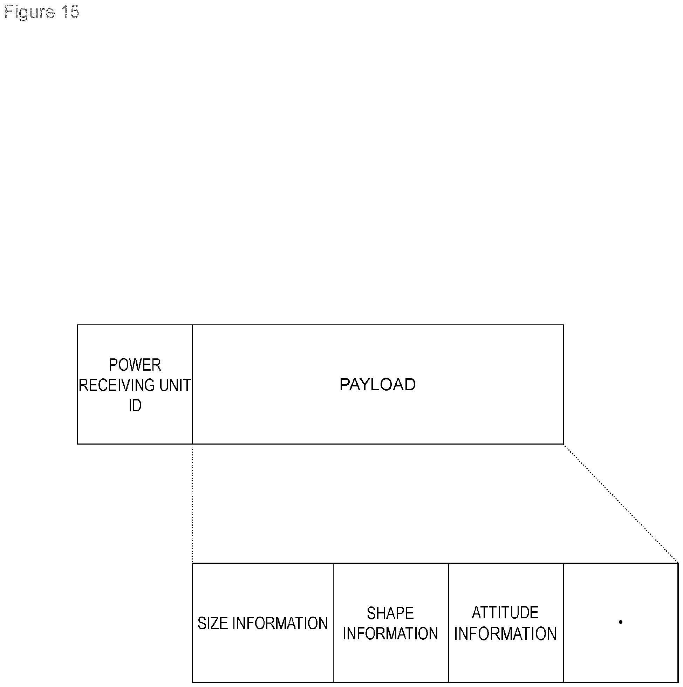

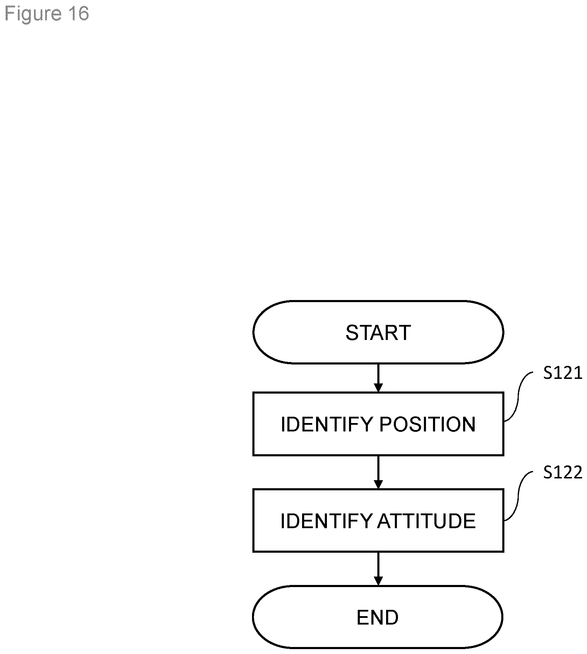

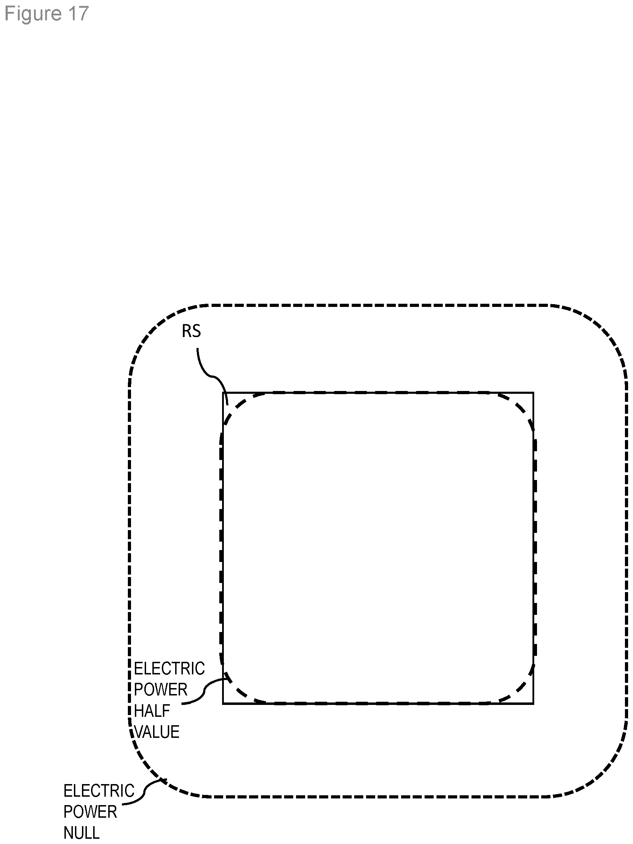

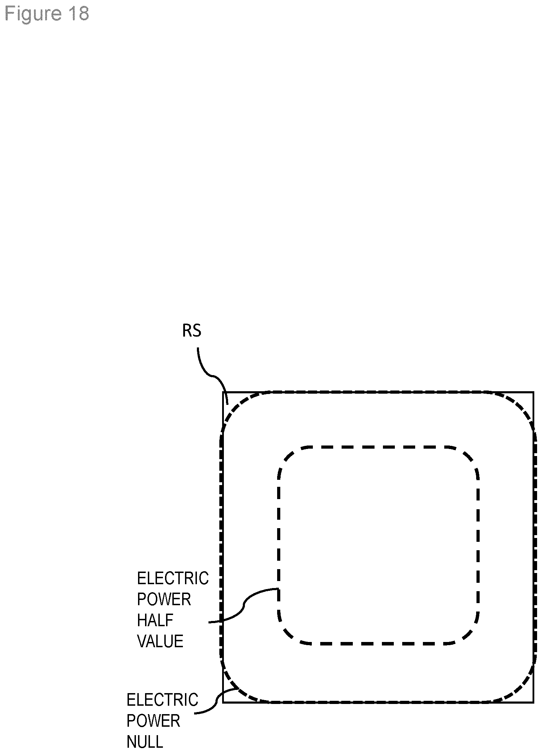

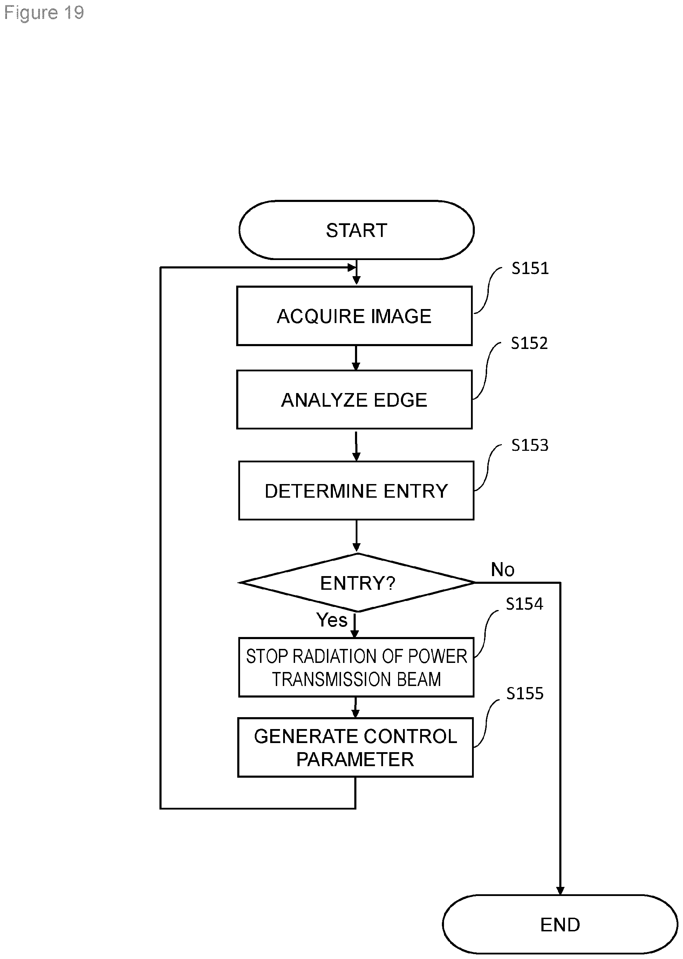

Power transmission control processing according to the present embodiment will be described. Figure 13 is a flow chart illustrating power transmission control processing according to the present embodiment. Figure 14 is a flow chart illustrating details of step S110 in Figure 13. Figure 15 is a diagram illustrating a structure of information received by the power transmission apparatus from the power reception apparatus. Figure 16 is a flow chart illustrating details of step S120 in Figure 13. Figure 17 is a diagram illustrating an ideal beam shape. Figure 18 is a diagram illustrating an ideal beam shape. Figure 19 is a flow chart illustrating details of step S150 in Figure 13.

The power transmission control processing shown in Figure 13 is started in response to, for example, the processor 12 acquiring a power supply request received by the communication interface 14 from the power reception apparatus 30.

As shown in Figure 13, the power transmission apparatus 10 executes identification of static information related to a power receiving surface (S110).

More specifically, the processor 12 identifies static information related to the power receiving surface.

The static information related to the power receiving surface is information of an attribute or a state assumed to have no possibility of changing between the start and the end of wireless power supply among the attributes and the states of the power receiving surface. As an example, static information is a size of the power receiving surface and a shape of the power receiving surface.

The size of the power receiving surface represents an actual size of the power receiving surface. For example, the size of the power receiving surface can include at least one of the following.
- A length of a part of or all of a contour line that defines the power receiving surface (for example, a length of a side of the power receiving surface or a total length of the power receiving surface)
- A length between two points on the contour line that defines the power receiving surface (for example, a length of a diagonal of the power receiving surface, a radius of the power receiving surface, a length of a long axis of the power receiving surface, or a length of a short axis of the power receiving surface)
- An area enclosed by the contour line that defines the power receiving surface

The shape of the power receiving surface represents a geometric shape of the power receiving surface. For example, the shape of the power receiving surface is a combination of any curves (for example, a circle or an ellipse), a combination of any straight lines (for example, a polygon), or a combination of any curves and any straight lines (for example, a fan shape).

As an example, the identification of static information related to the power receiving surface (S110) is performed along Figure 14.

As shown in Figure 14, the power transmission apparatus 10 executes identification of the size (S111).

More specifically, the processor 12 identifies the size of the power receiving surface by referring to information received from the power reception apparatus 30.

As an example, the communication interface 14 of the power transmission apparatus 10 receives information including a structure shown in Figure 15 from the power reception apparatus 30. A part of or all of the information may be included in, for example, the power supply request transmitted by the power reception apparatus 30 to the power transmission apparatus 10.

As shown in Figure 15, the information received from the power reception apparatus 30 can include size information, shape information, and attitude information in addition to a power receiving unit ID.

The power receiving unit ID is information that identifies the power receiving unit 35 included in the power reception apparatus 30 to be a transmission source. For example, the power receiving unit ID is stored in the storage apparatus 31 of the power reception apparatus 30.

The size information is information related to the size of the power receiving surface corresponding to the power receiving unit 35 that is identified by the power receiving unit ID. For example, the size information is stored in the storage apparatus 31 of the power reception apparatus 30.

The shape information is information related to the shape of the power receiving surface corresponding to the power receiving unit 35 that is identified by the power receiving unit ID. For example, the shape information is stored in the storage apparatus 31 of the power reception apparatus 30.

The attitude information is information related to the attitude of the power receiving surface corresponding to the power receiving unit 35 that is identified by the power receiving unit ID. As an example, the attitude information is generated by the processor 32 of the power reception apparatus 30 in accordance with a sensing result of an attitude sensor (an example of the input device 36). As another example, the attitude information can also be generated using a reception phase difference between power receiving antenna elements with respect to an incoming signal.

The processor 12 extracts information related to the size of the power receiving surface from information received from the power reception apparatus 30. The processor 12 identifies the size of the power receiving surface by referring to the extracted information.

As shown in Figure 14, the power transmission apparatus 10 executes identification of the shape (S112).

More specifically, the processor 12 identifies the shape of the power receiving surface by referring to information received from the power reception apparatus 30.

As an example, the processor 12 extracts information related to the shape of the power receiving surface from information (Figure 15) received from the power reception apparatus 30. The processor 12 identifies the shape of the power receiving surface by referring to the extracted information.

Step S112 may be executed after step S111 as shown in Figure 14 or may be executed before step Sill or executed concurrently with step S111.

As shown in Figure 13, the power transmission apparatus 10 executes identification of dynamic information related to the power receiving surface (S120).

More specifically, the processor 12 identifies dynamic information related to the power receiving surface.

Step S120 may be executed after step S110 as shown in Figure 14 or may be executed before step S110 or executed concurrently with step S110.

The dynamic information related to the power receiving surface is information of an attribute or a state assumed to have a possibility of changing between the start and the end of wireless power supply among the attributes and the states of the power receiving surface. As an example, dynamic information is a position of the power receiving surface and an attitude of the power receiving surface. When the power reception apparatus 30 moves or rotates between the start and the end of wireless power supply, at least one of the position of the power receiving surface and the attitude of the power receiving surface changes.

The position of the power receiving surface represents a relative position of the power receiving surface with respect to the power transmitting surface. For example, the position of the power receiving surface can include at least one of the following.
- Coordinates of one or more reference points (for example, vertices) on the contour line that defines the power receiving surface
- Coordinates of one or more reference points (for example, at least one of a center point and a center of gravity) inside the power receiving surface

The attitude of the power receiving surface represents a relative orientation of the power receiving surface with respect to a reference plane (for example, a horizontal plane or a power transmitting surface). As an example, the attitude of the power receiving surface is an inclination of the power receiving surface with respect to a reference plane (for example, at least one of a roll angle, a pitch angle, and a yaw angle of the power receiving surface).

As an example, the identification of dynamic information related to the power receiving surface (S120) is performed along Figure 16.

As shown in Figure 16, the power transmission apparatus 10 executes identification of the position (S121).

More specifically, the processor 12 identifies the position of the power receiving surface. The position of the power receiving surface can be identified using various techniques. Preferably, the processor 12 identifies the position of the power receiving surface without performing wireless power transmission. Accordingly, since a power transmission beam need not be radiated in order to identify the position of the power receiving surface, there are no adverse effects on a biological body or an object in the periphery when identifying the position of the power receiving surface.

In the present embodiment, the processor 12 identifies the position of the power receiving surface by referring to a sensing result of an optical sensor (an example of the input device 16).

As an example, the processor 12 refers to an image of the power reception apparatus 30 photographed by the camera 161 and measures a distance from the camera 161 to an object part. In addition, the processor 12 can identify the position of the power receiving surface based on the measured distance and known parameters (for example, a positional relationship between the camera 161 and a power transmitting surface, photographic conditions of the camera 161 (for example, an angle of view and an angle), and a positional relationship between the object part and the power receiving surface (for example, a center point of the power receiving surface)). Note that the processor 12 may identify the position of the power receiving surface by referring to a measurement result of a ranging sensor (for example, an ultrasonic sensor or Lidar).

The object part is a feature part that is observable from outside of the power reception apparatus 30. For example, the object part can include at least one of the following.
- A part of the power reception apparatus 30 or a cover that covers the power reception apparatus 30 to which a mark (for example, at least one of a two-dimensional barcode, specific irregularities, a specific pattern, a specific color, and a specific shape) is affixed
- At least one vertex, one corner, one side, or an entirety of each antenna 351
- A vertex, a corner, a side, or an entirety of the power receiving unit 35

As shown in Figure 16, the power transmission apparatus 10 executes identification of the attitude (S122).

More specifically, the processor 12 identifies the attitude of the power receiving surface by referring to information received from the power reception apparatus 30.

As an example, the processor 12 extracts information related to the attitude of the power receiving surface from information (Figure 15) received from the power reception apparatus 30. The processor 12 identifies the attitude of the power receiving surface by referring to the extracted information.

Step S122 may be executed after step S121 as shown in Figure 16 or may be executed before step S121 or executed concurrently with step S121.

After step S110 and step S120, the power transmission apparatus 10 executes generation of a control parameter (S130).

More specifically, the processor 12 refers to the static information of the power receiving surface identified in step S110 and the dynamic information of the power receiving surface identified in step S120 and generates a control parameter (for example, a beam excitation condition) related to beam formation. The control parameter determines a radiation direction and a beam shape of a power transmission beam.

For example, the processor 12 generates a control parameter so that a power transmission beam radiated from the power transmitting unit 15 is focused to a spot that conforms to the size of the power receiving surface, the shape of the power receiving surface, and the attitude of the power receiving surface at a position of the power receiving surface.

Accordingly, since the power transmission beam is concentrated over approximately an entire region of the power receiving surface, power receiving performance of a major portion of the antennas 351 included in the power receiving unit 35 can be elicited (in other words, highly efficient power transmission can be realized) and, at the same time, leakage of electromagnetic waves to the periphery of the power receiving unit 35 can be suppressed.

The control parameter of a first example is determined so that intensity of a power transmission beam becomes half of a maximum value (in other words, a half value) in at least a part of an edge (in other words, a side or a vertex) of the power receiving surface as shown in Figure 17. Accordingly, power transmission can be performed efficiently while suppressing variability in received power among the antennas 351.

The control parameter of a second example is determined so that intensity of a power transmission beam becomes null (in other words, a zero value) in at least a part of an edge of the power receiving surface as shown in Figure 18. Accordingly, efficiency of power transmission can be further increased.

After step S130, the power transmission apparatus 10 executes wireless power transmission (S140).

More specifically, the processor 12 causes the power transmitting unit 15 to radiate a power transmission beam in accordance with the control parameter generated in step S130 or in step S150 to be described later.

After step S140, the power transmission apparatus 10 executes security processing (S150).

More specifically, the processor 12 monitors entry of a biological body or an object with respect to a no-entry region. When the processor 12 detects entry of a biological body or an object with respect to the no-entry region, the processor 12 causes radiation of the power transmission beam to stop. Furthermore, when the processor 12 detects entry of a biological body or an object with respect to the no-entry region, the processor 12 may change the control parameter.

As an example, the security processing (S150) is performed along Figure 19.

As shown in Figure 19, the power transmission apparatus 10 executes acquisition of an image (S151).

More specifically, the processor 12 acquires image data representing a situation in a periphery of the power reception apparatus 30 from the camera 161.

After step S151, the power transmission apparatus 10 executes edge analysis (S152).

More specifically, the processor 12 obtains edge information by performing an edge analysis with respect to the image data acquired in step S151.

After step S152, the power transmission apparatus 10 executes entry determination (S153).

More specifically, the processor 12 refers to the edge information (for example, a position of an edge) obtained in step S152 to determine whether or not a biological body or an object has entered the no-entry region.

When the power transmission apparatus 10 determines in step S153 that a biological body or an object has entered the no-entry region, the power transmission apparatus 10 executes stoppage of radiation of the power transmission beam (S154).

More specifically, the processor 12 causes the power transmitting unit 15 to stop radiation of the power transmission beam. The processor 12 generates stoppage history information and stores the stoppage history information in the stoppage history database (Figure 12).

After step S154, the power transmission apparatus 10 executes generation of a control parameter (S155).

More specifically, when necessary, the processor 12 changes the control parameter presently being applied to the power transmitting unit 15. For example, the processor 12 may generate the control parameter so as to change at least one of a transmitted power of the power transmission beam, a size of a spot to which the power transmission beam is focused at a position of the power receiving surface, and a position of the spot to which the power transmission beam is focused at a position of the power receiving surface. Accordingly, since a position or a size of the no-entry region changes, even when a biological body or an object continues to stay at a same location, the biological body or the object may deviate from the no-entry region and there is a chance that radiation of the power transmission beam can be restarted.

In the first example of the generation of a control parameter (S155), the processor 12 performs at least one of the following.
- Generate the control parameter so that transmitted power of the power transmission beam decreases.
- Generate the control parameter so that a size of a spot to which the power transmission beam is focused at a position of the power receiving surface decreases.
- Generate the control parameter so that a reference position of the spot to which the power transmission beam is focused at a position of the power receiving surface moves in a direction of separation from the biological body or the object.

According to the first example of the generation of a control parameter (S155), since the no-entry region becomes smaller or an entry region moves away from the biological body or the object, an event in which the biological body or the object enters the no-entry region is less likely to occur. In other words, a decline in transmission efficiency due to stoppage of radiation of a power transmission beam can be suppressed.

In the second example of the generation of a control parameter (S155), the processor 12 generates the control parameter by referring to stoppage history information. The processor 12 may refer to all of the pieces of stoppage history information stored in the stoppage history database (Figure 12) or may refer to at least one piece of stoppage history information described below.
- Stoppage history information associated with user information corresponding to a user being provided with the wireless power supply service or with user information corresponding to another user similar to the user (for example, with partially matching attributes).
- Stoppage history information associated with power reception apparatus information corresponding to the power reception apparatus 30 being provided with the wireless power supply service or with power reception apparatus information corresponding to another power reception apparatus 30 similar to the power reception apparatus 30 (for example, with partially matching attributes).
- Stoppage history information associated with environmental information corresponding to a current environment of wireless power supply or with environmental information corresponding to another environment that is similar to the environment (for example, with partially matching attributes).

For example, the user and the power reception apparatus 30 being provided with the wireless power supply service may be identified based on information transmitted from the power reception apparatus 30 or may be identified by performing user authentication when applying for usage of the service.

The processor 12 generates the control parameter so that an expected value of an amount of electric power transmitted to the power reception apparatus 30 is increased (for example, maximized). As an example, the processor 12 refers to the static information acquired in step S110 and the dynamic information acquired in step S120 and calculates, for each of a plurality of candidates that can be adopted as the control parameter, received power (hereinafter, referred to as "normal received power") of the power reception apparatus 30 by radiation of the power transmission beam when adopting the candidate. The processor 12 refers to the static information acquired in step S110, the dynamic information acquired in step S120, and stoppage history information and predicts, for each of the plurality of candidates described above, a probability that radiation of the power transmission beam stops when the candidate is adopted (for example, a probability that radiation of the power transmission beam has stopped at a randomly selected time point). The processor 12 refers to the calculated normal received power and the predicted probability and calculates an expected value of an amount of electric power to be transmitted to the power reception apparatus 30. For example, when the normal received power is denoted by R and the probability is denoted by p, the processor 12 may calculate R*(1-p) as the expected value described above. The processor 12 calculates the expected value for each of a plurality of candidates and determines a candidate that does not minimize (for example, that maximizes) the expected value as a new control parameter.

According to the second example of the generation of a control parameter (S155), the control parameter is generated in accordance with stoppage history information. Therefore, a probability that radiation of the power transmission beam is to be stopped can be statistically estimated and an appropriate control parameter can be determined based on the probability. By narrowing down the pieces of stoppage history information to be referenced to information related to a specific user, a specific power reception apparatus 30, a specific environment, or a combination thereof, the control parameter can be adapted to characteristic elements (for example, a habit of the user) when providing service with respect to the specific user, the specific power reception apparatus 30, the specific environment, or a combination thereof.

When the power transmission apparatus 10 does not determine in step S153 that a biological body or an object has entered the no-entry region, the power transmission apparatus 10 ends the security processing (S150).

After step S150, the power transmission apparatus 10 returns to wireless power transmission (S140) and repeats the steps of processing described earlier.

When end conditions are satisfied, the power transmission apparatus 10 ends the power transmission control processing (Figure 13). For example, the end conditions may be at least one of the following. Whether or not the end conditions are satisfied may be determined at a predetermined timing or the end conditions may be determined to be satisfied in accordance with an occurrence of an interrupt event.
- A capacity of the battery of the power reception apparatus 30 reaches a threshold (for example, full charge) (for example, information received from the power reception apparatus 30 is referred to)
- The power reception apparatus 30 can no longer be detected (for example, wireless connection with the power reception apparatus 30 is disconnected)
- A power transmission end request is received from the power reception apparatus 30
- A vibration of the power reception apparatus 30 is detected (the power reception apparatus 30 can transmit a vibration detection signal when a vibration sensor installed in the power reception apparatus 30 detects a vibration of the power reception apparatus 30)
- A power transmission end signal is received (for example, from a remote controller (not illustrated))
- A predetermined amount of time has elapsed from start of wireless power transmission
- Another power reception apparatus 30 with a higher power transmission priority than the power reception apparatus 30 has become active in a same power transmission area

In this case, the power transmission area refers to an area in which the power transmission apparatus 10 provides wireless power supply. The power transmission priority is an index used by the power transmission apparatus 10 to determine the target power reception apparatus from a plurality of active power reception apparatuses 30. For example, the power transmission priority can be determined based on a remaining battery life of the power reception apparatus 30, history of use by a user with respect to the power reception apparatus 30, or a combination thereof. The power reception apparatus 30 having become active means that the power reception apparatus 30 is in a wait state for wireless power supply. For example, the power reception apparatus 30 can become active as a trigger when the power reception apparatus 30 changes to a state (a position or an attitude) that enables the power reception apparatus 30 to receive power, when the power reception apparatus 30 changes to a communicable state, or when the remaining battery life of the power reception apparatus 30 drops to or below a threshold.

Let us assume that a first power reception apparatus 30A (for example, a smartphone) and a second power reception apparatus 30B (for example, a laptop computer) are present in a same power transmission area and that wireless power supply with respect to the first power reception apparatus 30A is being performed. When the remaining battery life of the second power reception apparatus 30B becomes depleted due to use of the second power reception apparatus 30B by a user, the power transmission priority of the second power reception apparatus 30B becomes higher than the power transmission priority of the first power reception apparatus 30A. When the power transmission apparatus 10 detects the inversion of the power transmission priorities, the power transmission apparatus 10 can temporarily stop the wireless power supply to the first power reception apparatus 30A and start wireless power supply to the second power reception apparatus 30B (switching of target power reception apparatuses).

### (5) Summary

As described above, the power transmission apparatus 10 according to the present embodiment refers to dynamic information and static information related to a power receiving surface that corresponds to the power receiving unit 35 included in the power reception apparatus 30 and generates a control parameter related to a radiation direction and a beam shape of a power transmission beam, and causes the power transmitting unit 15 to radiate the power transmission beam. The power transmission apparatus 10 refers to a position of an edge in an image obtained by photographing a periphery of the power reception apparatus 30 and monitors entry of a biological body or an object with respect to a no-entry region, and stops the power transmission beam when an entry is detected. Accordingly, transmission efficiency can be increased while securing safety of a periphery of the power reception apparatus 30 in wireless power supply. For example, even when the biological body or the object and the power reception apparatus 30 coexist in a limited space, wireless power supply can be performed in a proactive manner as long as the biological body or the object is at a safe position, but when the biological body or the object erroneously enters the no-entry region, the event can be accurately detected and safety can be secured by stopping the power transmission beam.

When the power transmission apparatus 10 stops radiation of the power transmission beam, the power transmission apparatus 10 may generate a control parameter so as to change at least one of a transmitted power of the power transmission beam, a size of a spot to which the power transmission beam is focused at a position of the power receiving surface, and a position of the spot to which the power transmission beam is focused at a position of the power receiving surface. Accordingly, the control parameter can be changed so that a probability of radiation of the power transmission beam being stopped decreases or normal received power increases to further increase transmission efficiency.

The power transmission apparatus 10 may generate the control parameter by referring to stoppage history information. Accordingly, a probability that radiation of the power transmission beam is to be stopped can be statistically estimated and an appropriate control parameter can be determined based on the probability. The power transmission apparatus 10 may generate the control parameter by referring to stoppage history information related to a specific user, a specific power reception apparatus 30, a specific environment, or a combination thereof. Accordingly, the control parameter can be adapted to characteristic elements (for example, a habit of the user) when providing service to the specific user, the specific power reception apparatus 30, the specific environment, or a combination thereof. The power transmission apparatus 10 may calculate, for each of a plurality of candidates that can be adopted as the control parameter, normal received power when adopting the candidate and predict a probability that radiation of the power transmission beam is to be stopped when adopting the candidate. The power transmission apparatus 10 may refer to the calculated normal received power and the predicted probability and generate the control parameter so that an expected value of an amount of electric power to be transmitted by the power transmission beam increases. Accordingly, a control parameter that increases (for example, maximizes) an expected value of an amount of electric power to be transmitted can be determined.

### (6) Modifications

Modifications of the present embodiment will be described.

### (6-1) First modification

A first modification will be described. The first modification is an example of updating a control parameter in response to a change in dynamic information related to a power receiving surface.

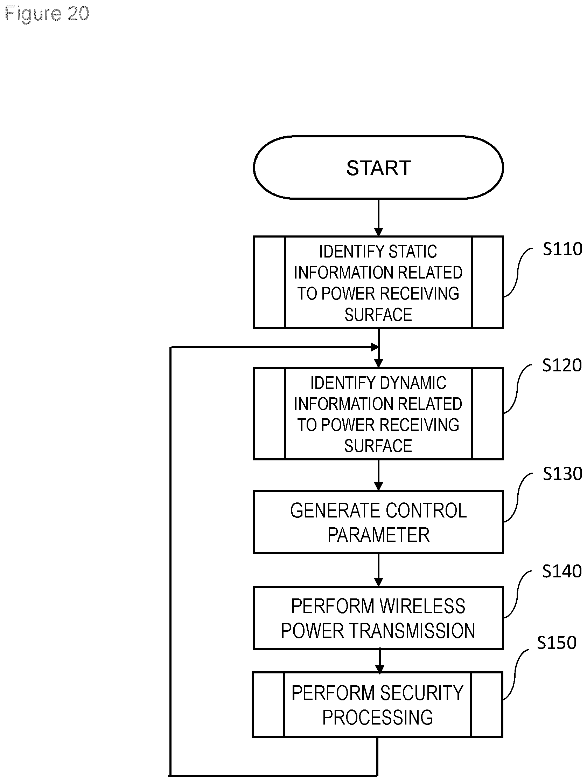

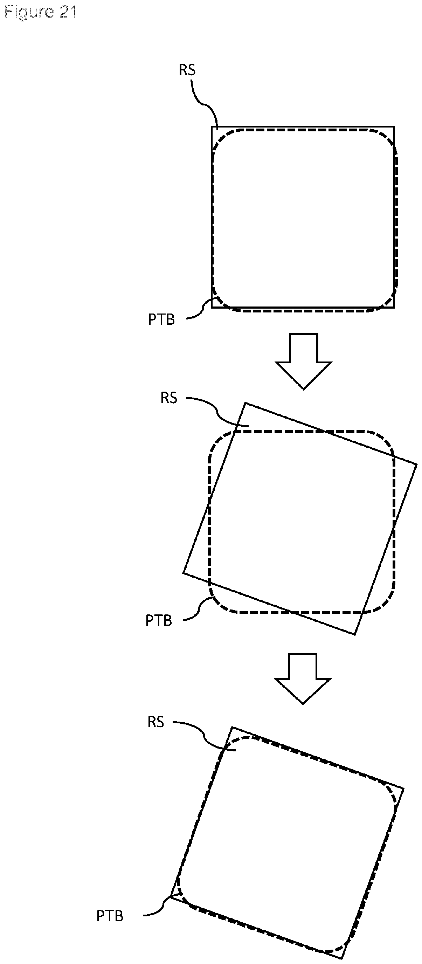

Power transmission control processing according to the first modification will be described. Figure 20 is a flow chart illustrating power transmission control processing according to the first modification. Figure 21 is an explanatory diagram of control with respect to a power transmission beam when an attitude of the power receiving surface changes.

As shown in Figure 20, the power transmission apparatus 10 executes identification of static information related to the power receiving surface (S110), identification of dynamic information related to the power receiving surface (S120), generation of a control parameter (S130), wireless power transmission (S140), and security processing (S150) in a similar manner to Figure 13.

After step S150, unlike in Figure 13, the power transmission apparatus 10 returns to the identification of dynamic information related to the power receiving surface (S120) and repeats the steps of processing described earlier.

Accordingly, the control parameter can be updated in response to a change in dynamic information related to the power receiving surface. For example, when the attitude of the power receiving surface changes due to rotation, by changing a rotational angle of the power transmission beam PTB, the change in the attitude of the power receiving surface can be tracked as shown in Figure 21.

As described above, with the power transmission apparatus according to the first modification, even if at least one of a position and an attitude of the power receiving surface changes, the power transmission beam can be adaptively shaped. In other words, highly-efficient power transmission can be realized while suppressing leakage of electromagnetic waves in a robust manner with respect to a motion (a movement or a rotation) of a power reception apparatus.

### (6-2) Second modification

A second modification will be described. The second modification is an example in which static information related to a power receiving surface is stored in the storage apparatus 11 of the power transmission apparatus 10 in advance.

In the second modification, in step S110 in Figure 13 or Figure 20, the processor 12 identifies static information related to the power receiving surface by referring to a power receiving unit database stored in the storage apparatus 11.

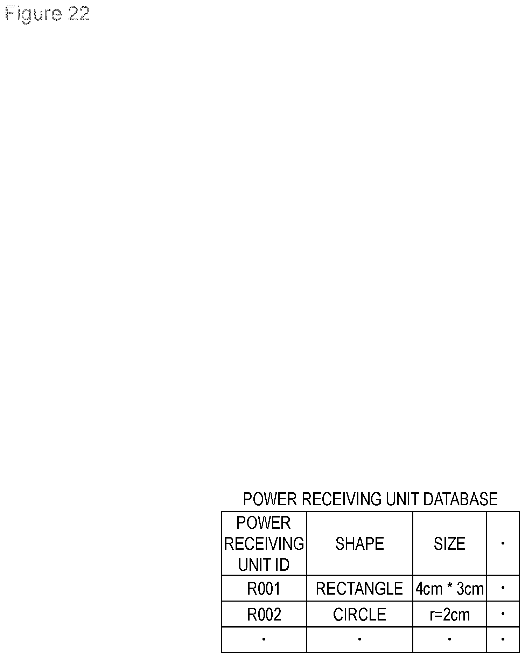

Figure 22 is a diagram illustrating a data structure of the power receiving unit database according to the second modification. The power receiving unit database is stored in the storage apparatus 11.

As shown in Figure 22, the power receiving unit database includes a "power receiving unit ID" field, a "shape" field, and a "size" field. The respective fields are associated with each other.

Static information related to a power receiving surface corresponding to each power receiving unit 35 is registered in the power receiving unit database.

The "power receiving unit ID" field stores the power receiving unit ID described earlier.

The "shape" field stores the shape information described earlier.

The "size" field stores the size information described earlier.

For example, when the power transmission apparatus 10 performs wireless power transmission with respect to the power receiving unit 35 for the first time or when registering the power receiving unit 35 to the power transmission apparatus 10 as one power supply target, the processor 12 may refer to information received from the power reception apparatus 30 and register static information related to a power receiving surface corresponding to the power receiving unit 35 to the power receiving unit database or a person may manually register static information related to a power receiving surface corresponding to the power receiving unit 35 to the power receiving unit database.

Note that at least one of shape information and size information may be associated with model information instead of with a power receiving unit ID. The model information is information related to a model of at least one of the power reception apparatus 30 and the power receiving unit 35.

As described above, with the power transmission apparatus according to the second modification, static information related to a power receiving surface is stored in the storage apparatus 11 of the power transmission apparatus 10 in advance. Therefore, static information related to a power receiving surface can be identified and a power transmission beam can be shaped even without receiving the static information related to the power receiving surface from the power reception apparatus 30 every time wireless power transmission is performed. In other words, highly-efficient power transmission can be realized while suppressing leakage of electromagnetic waves even in state where receiving information from the power reception apparatus 30 is difficult or impossible.

### (6-3) Third modification

A third modification will be described. The third modification is an example of generating a control parameter in accordance with a motion of a biological body or an object in a periphery of a power reception apparatus.

The processor 12 refers to an image obtained by photographing a periphery of the power reception apparatus 30 and analyzes a motion of a biological body or an object in the periphery of the power reception apparatus 30. The processor 12 may refer to image data acquired in step S151 in Figure 19 or may refer to image data acquired at another timing.

As an example, the processor 12 analyzes an amount of motion of the biological body or the object and calculates an index related to the amount of motion.

The processor 12 further refers to an analysis result of the motion of the biological body or the object and generates a control parameter. For example, the processor 12 may generate the control parameter by referring to the analysis result in step S130 in Figure 13 or Figure 20 or generate the control parameter by referring to the analysis result in step S155 in Figure 19.

When the index related to the amount of motion exceeds a first threshold, the processor 12 generates the control parameter by prioritizing avoiding stoppage of radiation of a power transmission beam. For example, the processor 12 can perform at least one of the following.
- Generate the control parameter so that transmitted power of the power transmission beam decreases.
- Generate the control parameter so that a size of a spot to which the power transmission beam is focused at a position of the power receiving surface decreases.
- Generate the control parameter so that a reference position of the spot to which the power transmission beam is focused at a position of the power receiving surface moves in a direction of separation from the biological body or the object.

On the other hand, when the index related to the amount of motion is equal to or below a second threshold (< first threshold), the processor 12 generates the control parameter by prioritizing increasing normal received power. For example, the processor 12 can perform at least one of the following.
- Generate the control parameter so that transmitted power of the power transmission beam increases.
- Generate the control parameter so that a size of a spot to which the power transmission beam is focused at a position of the power receiving surface increases. However, when the power transmission beam is concentrated over approximately an entire region of the power receiving surface, the size of the spot is not further increased.
- Generate the control parameter so that a reference position of the spot to which the power transmission beam is focused at a position of the power receiving surface moves in a direction approaching an optimal position where normal received power is maximized. For example, when the reference position is a center of the spot, a center of the power receiving surface may be the optimal position.

As described above, the power transmission apparatus 10 according to the third modification generates a control parameter in accordance with a motion of a biological body or an object in a periphery of the power reception apparatus 30. Accordingly, the control parameter can be adapted to a motion of the biological body or the object that may change from moment to moment. When the motion of the biological body or the object is large, the power transmission apparatus 10 generates the control parameter by prioritizing avoiding stoppage of radiation of a power transmission beam. Accordingly, entry by the biological body or the object with respect to a no-entry region can be prevented in advance and a decline in transmission efficiency due to radiation of a power transmission beam being stopped can be suppressed.

### (6-4) Fourth modification

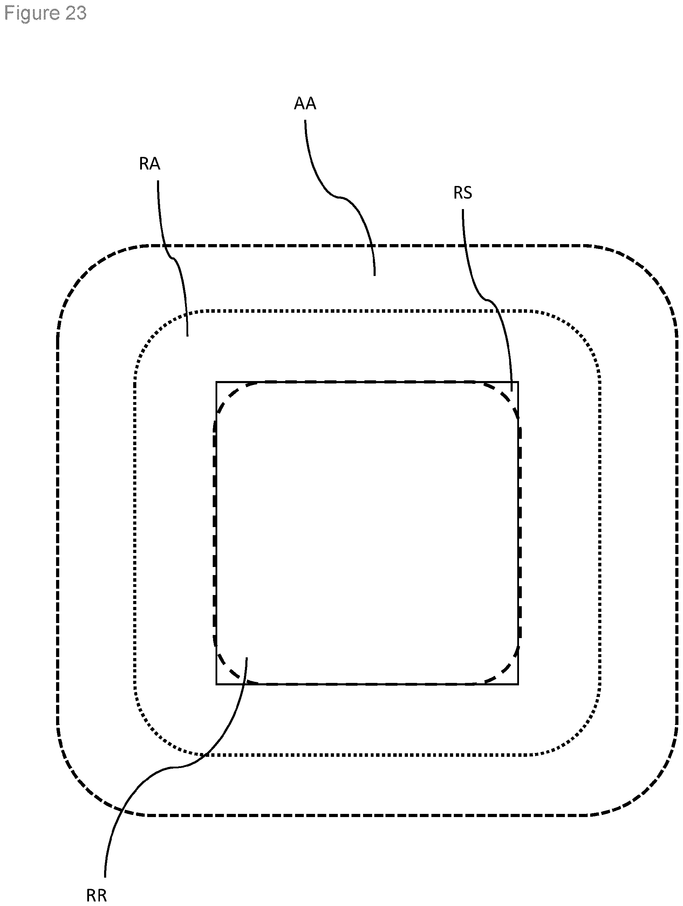

A fourth modification will be described. The fourth modification is an example of generating a control parameter in accordance with entry/separation of a biological body or an object with respect to a caution region that is defined in a periphery of a no-entry region. Figure 23 is a diagram illustrating a caution region according to the fourth modification.

As shown in Figure 23, a caution region AA is defined in the periphery of the no-entry region RA. The caution region AA can be defined using at least one of the following as a reference.
- Received power
- Distance from no-entry region RA
- Photographic range of camera 161

Since power received by a biological body or an object outside of the no-entry region RA is low, radiation of a power transmission beam need not be stopped. However, the closer a position of the biological body or the object to the no-entry region RA, a probability of entry by the biological body or the object with respect to the no-entry region RA increases. The power transmission apparatus 10 according to the fourth modification prevents entry by the biological body or the object with respect to the no-entry region RA in advance by reducing the no-entry region RA or moving the no-entry region RA away from the biological body or the object when the biological body or the object enters the caution region AA.

In a similar manner to step S153 in Figure 19, the processor 12 refers to the edge information obtained in step S152 and determines whether or not a biological body or an object has entered the caution region.

When the processor 12 determines that the biological body or the object has entered the caution region but has not entered the no-entry region, the processor 12 generates a control parameter by prioritizing avoiding stoppage of radiation of a power transmission beam. For example, the processor 12 can perform at least one of the following.
- Generate the control parameter so that transmitted power of the power transmission beam decreases.
- Generate the control parameter so that a size of a spot to which the power transmission beam is focused at a position of the power receiving surface decreases.
- Generate the control parameter so that a reference position of the spot to which the power transmission beam is focused at a position of the power receiving surface moves in a direction of separation from the biological body or the object.

On the other hand, when the processor 12 determines that the biological body or the object has not entered the caution region, the processor 12 maintains the control parameter generated in step S130 in Figure 13 or Figure 20 executed immediately before.

As described above, when the power transmission apparatus 10 according to the fourth modification detects entry by a biological body or an object into the caution region, the power transmission apparatus 10 generates a control parameter by prioritizing avoiding stoppage of radiation of a power transmission beam. Accordingly, entry by the biological body or the object with respect to a no-entry region can be prevented in advance and a decline in transmission efficiency due to radiation of a power transmission beam being stopped can be suppressed.

### (6-5) Fifth modification

A fifth modification will be described. The fifth modification is an example of providing a user with information related to improving a charging rate.

The power transmission apparatus 10 according to the fifth modification provides a user with information related to improving a charging rate as a trigger when an event of a decline in the charging rate occurs. For example, the event of a decline in the charging rate is at least one of the following.
- A power transmission beam is stopped
- A frequency of stoppage of a power transmission beam exceeds a threshold
- An expected value or a measured value of an amount of electric power transmitted by a power transmission beam falls below a threshold
- A control parameter is generated so that transmitted power of a power transmission beam equals or falls below a threshold
- A control parameter is generated so that a size of a spot to which a power transmission beam is focused at a position of a power receiving surface equals or falls below a threshold
- A control parameter is generated so that a distance between a reference position of a spot to which the power transmission beam is focused at a position of the power receiving surface and an optimal position equals or exceeds a threshold

For example, the power transmission apparatus 10 provides the user with information related to improving a charging rate by executing at least one of the operations described below.
- Transmit a message to the power reception apparatus 30 and cause the power reception apparatus 30 to output the message.
- Transmit a message to an information processing apparatus (for example, a wearable device worn by the user or a store-use tablet terminal installed at a seat of the user) other than the power reception apparatus 30 which is capable of communicating with the power transmission apparatus 10 and cause the information processing apparatus to output the message.
- Change an emitted color or a blinking pattern of the light source 162 or another light source.

The message described above may be an image (including imaged texts) or audio that prompts the user to move a biological body (for example, a hand of the user) or an object (for example, an electronic equipment that needs to be protected from radio waves) away from the power reception apparatus 30. Alternatively, the message described above may be an image (including imaged texts) or audio that prompts the user to move the power reception apparatus 30 away from a biological body or an object.

With the power transmission apparatus according to the fifth modification, the user can be made aware of desirable actions in order to improve a charging rate and can be prompted to take such actions. Accordingly, user experience of a wireless power supply service can be prevented from deteriorating due to a drop in charging rate caused by an involuntary action of the user.

### (7) Other modifications

The storage apparatus 11 may be connected to the power transmission apparatus 10 via a network NW. The storage apparatus 31 may be connected to the power reception apparatus 30 via a network NW.

In the embodiment, an example where the power reception apparatus 30 transmits a power supply request to the power transmission apparatus 10 has been shown. However, the power transmission apparatus 10 may perform wireless power supply to any of the power reception apparatuses 30 even without receiving a power supply request. As an example, the power transmission apparatus 10 may perform wireless power supply according to a predetermined schedule or determine necessity of wireless power supply by collecting battery capacity information from the power reception apparatuses 30.

In the description presented above, an example where the power transmission apparatus 10 generates a control parameter by referring to stoppage history information in step S155 in Figure 19 has been shown. However, the power transmission apparatus 10 may generate the control parameter by referring to stoppage history information in step S130 in Figure 13 or Figure 20. Accordingly, a probability that radiation of a power transmission beam is to be stopped can be statistically estimated at a timing where a control parameter is initially determined after starting provision of a wireless power supply service and the control parameter can be optimized by referring to the probability.

Static information (for example, at least one of a size and a shape) of the power receiving surface can also be identified by techniques that differ from the technique described earlier.

For example, the processor 12 may read a code (for example, a two-dimensional barcode) attached to the power reception apparatus 30 or to a cover that covers the power reception apparatus 30 to read information related to a size of a power receiving surface that is stored in the code.

In the embodiment, an example of referring to an image of the power reception apparatus 30 photographed by the camera 161 to measure a distance from the camera 161 to an object part has been shown. The camera 161 may be a stereo camera or a monocular camera. Using a monocular camera enables the power transmission apparatus 10 to be realized in a smaller size and at a lower cost than when using a stereo camera. Hereinafter, an example of a technique of referring to an image of the power reception apparatus 30 photographed by a monocular camera to measure a distance from the monocular camera to an object part will be described.

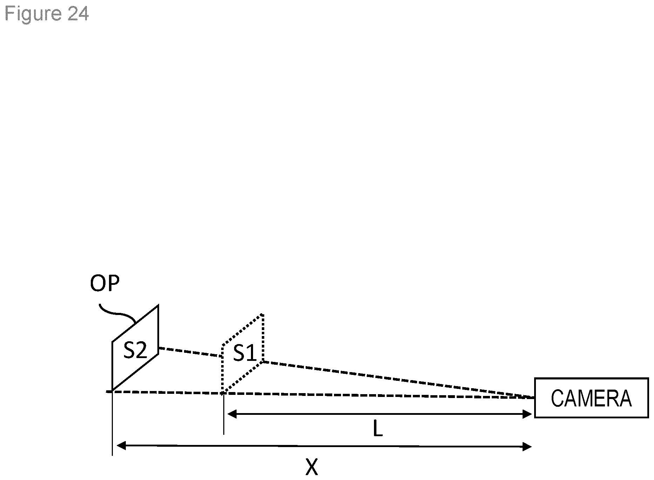

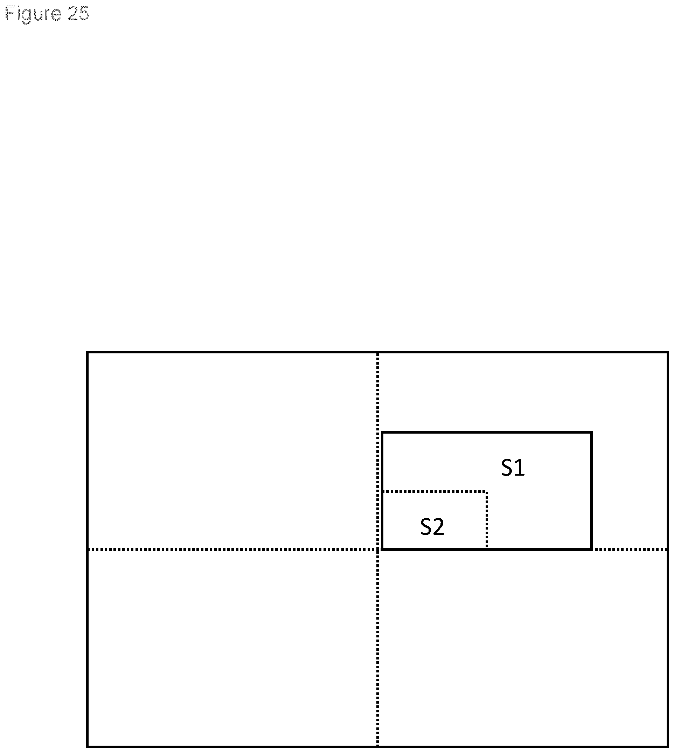

As shown in Figure 24, the monocular camera photographs a subject including an object part OP. As shown in Figure 25, the processor 12 extracts a region corresponding to the object part OP by performing image processing with respect to the image photographed by the monocular camera. The processor 12 counts the number of pixels in the region corresponding to the object part OP. In this case, the number of pixels in the region corresponding to the object part OP is dependent on a distance from the monocular camera to the object part OP. If the number of pixels at distance = L is denoted by S1 and the number of pixels at distance = X is denoted by S2, then X = L × √(S1/S2) is satisfied. By determining a reference distance L and the reference number of pixels S1 in advance as constants, the processor 12 can derive X as a function of S2. As an example, when L = 100 [cm], S1 = 600 × 400 [pixels], and S2 being counted as S2 = 300 × 200 [pixels], the equation above gives X = 200 [cm].

The reference distance L and the reference number of pixels S1 may be included in the static information of the power receiving surface. In other words, the reference distance L and the reference number of pixels S1 may be identified by reading information stored in a code (for example, a two-dimensional barcode) attached to the power reception apparatus 30 or to a cover that covers the power reception apparatus 30 or the power reception apparatus 30 may transmit the information to the power transmission apparatus 10.

A position of the power receiving surface can also be identified by techniques that differ from the technique described earlier.

As a first example, the power reception apparatus 30 may identify a position of a power transmitting surface with respect to a power receiving surface by referring to, for example, a sensing result of an optical sensor (an example of the input device 36) and may transmit information related to the identified position to the power transmission apparatus 10. The power transmission apparatus 10 is capable of identifying a relative position of a power receiving surface with respect to the power transmitting surface by converting the position identified by the power reception apparatus 30 so that the position of the power transmitting surface becomes an origin.

As a second example, the power reception apparatus 30 may be fixed by a support that is installed so that a relative position of a power receiving surface with respect to a power transmitting surface has a predetermined value. Accordingly, the processor 12 can identify the position of the power receiving surface as a predetermined value without having to measure the relative position of the power receiving surface with respect to the power transmitting surface. The predetermined value can be stored in the storage apparatus 11 prior to start of wireless power supply.

As a third example, the power transmission apparatus 10 measures absolute coordinates (for example, latitude, longitude, and elevation) of a power transmitting surface using, for example, GPS (Global Positioning System). In a similar manner, the power reception apparatus 30 measures absolute coordinates of a power receiving surface using, for example, GPS and transmits information related to the measured absolute coordinates to the power transmission apparatus 10. The power transmission apparatus 10 is capable of identifying a relative position of the power receiving surface with respect to the power transmitting surface by subtracting the absolute coordinates of the power transmitting surface from the absolute coordinates of the power receiving surface.

An attitude of the power receiving surface can also be identified by techniques that differ from the technique described earlier.

More specifically, the processor 12 may identify the attitude of the power receiving surface by referring to a sensing result of an optical sensor. As an example, the processor 12 can identify the attitude of the power receiving surface by performing image processing (for example, extraction of vertices of the power receiving surface and matching between the extracted vertices and a shape of the power receiving surface) with respect to an image of the power reception apparatus 30 photographed by the camera 161.

As a second example, the power reception apparatus 30 may be fixed by a support that is installed so that an attitude of a power receiving surface with respect to a power transmitting surface has a predetermined value. Accordingly, the processor 12 can identify the attitude of the power receiving surface as a predetermined value without having to measure the attitude of the power receiving surface with respect to the power transmitting surface. The predetermined value can be stored in the storage apparatus 11 prior to start of wireless power supply.

In the embodiment, an example of referring to a position, a size, a shape, and an attitude of a power receiving surface to generate a control parameter has been shown. However, the control parameter may be generated without referring to at least one of a shape and an attitude.

As a first example, the processor 12 may generate a control parameter so that a power transmission beam radiated from the power transmitting unit 15 is focused to a spot that conforms to the size of the power receiving surface at a position of the power receiving surface.

As a second example, the processor 12 may generate the control parameter so that a power transmission beam radiated from the power transmitting unit 15 is focused to a spot that conforms to the size of the power receiving surface and the shape of the power receiving surface at a position of the power receiving surface.

As a third example, the processor 12 may generate the control parameter so that a power transmission beam radiated from the power transmitting unit 15 is focused to a spot that conforms to the size of the power receiving surface and the attitude of the power receiving surface at a position of the power receiving surface.

In the embodiment, an example of the power reception apparatus 30 transmitting static information of a power receiving surface to the power transmission apparatus 10 has been described. However, the power reception apparatus 30 may transmit class information instead of static information or in addition to static information. The class information indicates a power receiving class to which a power receiving capability of the power receiving unit 35 belongs. A power receiving class is a concept that typifies a power receiving capability of the power receiving unit 35 included in various power reception apparatuses 30.

For example, the power receiving capability includes at least one of the following.
- A size of a power receiving surface
- A shape of a power receiving surface
- A power range that can be received by the power receiving unit 35
- A frequency that can be received by the power receiving unit 35
- A type of polarized wave that can be received by the power receiving unit 35

The power transmission apparatus 10 retains a database storing information (power receiving class information) related to various power receiving classes. Using class information received from the power reception apparatus 30, the power transmission apparatus 10 can identify the power receiving capability of the power receiving unit 35 included in the power reception apparatus 30.

Note that the power transmission apparatus 10 can also identify the power receiving class information of the power reception apparatus 30 without having the power reception apparatus 30 transmit the power receiving class information. For example, the processor 12 may read a code (for example, a two-dimensional barcode) attached to the power reception apparatus 30 or to a cover that covers the power reception apparatus 30 to read the power receiving class information that is stored in the code.

In the embodiment, an example of the power transmission apparatus 10 including one power transmitting unit 15 has been described. However, the power transmission apparatus 10 may include a plurality of power transmitting units 15 that can be independently controlled. Furthermore, the power transmitting unit 15 and other constituent elements (for example a control unit) in the power transmission apparatus 10 may be configured as separate apparatuses that are capable of communicating with each other. In other words, the power transmission apparatus 10 need not include the power transmitting unit 15. In this case, the power transmitting unit 15 can be built into an apparatus that includes a communication interface for receiving a control parameter from the power transmission apparatus 10 and a processor (for example, a microcomputer) for driving the power transmitting unit 15 in accordance with the control parameter from the power transmission apparatus 10.

In a similar manner, the power receiving unit 35 and other constituent elements (for example a control unit) in the power reception apparatus 30 may be configured as separate apparatuses that are capable of communicating with each other. In other words, the power reception apparatus 30 need not include the power receiving unit 35.

In the embodiment, an antenna has been described as an example of a beam-radiating element. However, when using light waves as power-supplying electromagnetic waves, the beam-radiating element may be a light-emitting element such as a laser element or an LED chip, for example.

While an embodiment of the present invention has been described in detail above, a scope of the present invention is not limited to the embodiment described above. In addition, various modifications or changes can be made to the embodiment described above without departing from the gist of the present invention. Furthermore, the embodiment and the modifications described above can be combined with one another.

### [REFERENCE SIGNS LIST]

- 1: wireless power supply system
- 10: power transmission apparatus
- 11: storage apparatus
- 12: processor
- 13: input/output interface
- 14: communication interface
- 15: power transmitting unit
- 16: input device
- 17: output device
- 30: power reception apparatus
- 31: storage apparatus
- 32: processor
- 33: input/output interface
- 34: communication interface
- 35: power receiving unit
- 36: input device
- 37: output device
- 151: antenna
- 161: camera
- 162: light source
- 351: antenna

## Claims

1. A power transmission apparatus, comprising
a control unit that controls a power transmitting unit that performs wireless power transmission, wherein the control unit includes:
means for identifying dynamic information related to a power receiving surface that corresponds to a power receiving unit included in a target power reception apparatus;
means for identifying static information related to the power receiving surface;
means for generating a control parameter related to a radiation direction and a beam shape of a power transmission beam for supplying electrical power to the target power reception apparatus by referring to the dynamic information related to the power receiving surface and the static information related to the power receiving surface;
means for causing the power transmitting unit to radiate the power transmission beam in accordance with the control parameter;
means for referring to a position of an edge in an image obtained by photographing a periphery of the target power reception apparatus and monitoring entry of a biological body or an object with respect to a no-entry region that is created in a periphery of a path of the power transmission beam; and
means for stopping radiation of the power transmission beam when entry of a biological body or an object with respect to the no-entry region is detected.

2. The power transmission apparatus according to claim 1, wherein
the means for generating a control parameter generates the control parameter so as to change at least one of a transmitted power of the power transmission beam, a size of a spot to which the power transmission beam is focused at a position of the power receiving surface, and a position of the spot to which the power transmission beam is focused at a position of the power receiving surface when radiation of the power transmission beam is stopped.

3. The power transmission apparatus according to claim 1 or 2, wherein
the means for generating a control parameter generates the control parameter by further referring to history information related to stoppage of radiation of the power transmission beam.

4. The power transmission apparatus according to claim 3, wherein
the means for generating a control parameter generates the control parameter by referring to history information associated with user information corresponding to a user being provided with a wireless power supply service by the power transmission apparatus or history information associated with user information corresponding to another user who is similar to the user among the history information.

5. The power transmission apparatus according to claim 3 or 4, wherein
the means for generating a control parameter generates the control parameter by referring to history information associated with power reception apparatus information corresponding to a target power reception apparatus being provided with a wireless power supply service by the power transmission apparatus or history information associated with power reception apparatus information corresponding to another power reception apparatus that is similar to the target power reception apparatus among the history information.

6. The power transmission apparatus according to any one of claims 3 to 5, wherein
the means for generating a control parameter generates the control parameter by referring to history information associated with environmental information corresponding to an environment of wireless power supply at a time of generation of the control parameter or history information associated with environmental information corresponding to another environment that is similar to the environment among the history information.

7. The power transmission apparatus according to any one of claims 3 to 6, wherein
the means for generating a control parameter refers to dynamic information related to the power receiving surface and static information related to the power receiving surface, calculates, for each of a plurality of candidates that can be adopted as the control parameter, normal received power that is received power of the target power reception apparatus due to radiation of the power transmission beam when adopting the candidate, refers to the dynamic information related to the power receiving surface, the static information related to the power receiving surface, and the history information, predicts, for each of a plurality of candidates that can be adopted as the control parameter, a probability that radiation of the power transmission beam stops when the candidate is adopted, refers to the normal received power and the probability, and generates the control parameter so that an expected value of an amount of electric power to be transmitted by the power transmission beam increases.

8. The power transmission apparatus according to any one of claims 1 to 7, further comprising
means for analyzing a motion of a biological body or an object in a periphery of the target power reception apparatus by referring to an image obtained by photographing the periphery of the target power reception apparatus, wherein
the means for generating a control parameter generates the control parameter by referring to an analysis result of the motion of the biological body or the object.

9. The power transmission apparatus according to claim 8, wherein
the means for generating a control parameter generates the control parameter by prioritizing avoiding stoppage of radiation of the power transmission beam when an index related to an amount of motion of the biological body or the object exceeds a threshold.

10. The power transmission apparatus according to any one of claims 1 to 9, wherein
the control unit further includes means for referring to a position of the edge and monitoring entry of a biological body or an object with respect to a caution region that is defined in a periphery of the no-entry region, and
the means for generating a control parameter generates the control parameter by prioritizing avoiding stoppage of radiation of the power transmission beam when entry by the biological body or the object with respect to the caution region is detected.

11. The power transmission apparatus according to any one of claims 1 to 10, wherein
the control unit further includes:
means for determining power transmission priorities of a plurality of power reception apparatuses in a power transmission area; and
means for selecting the target power reception apparatus from the plurality of power reception apparatuses in the power transmission area based on the power transmission priorities.

12. A power transmission control method performed by a computer, comprising:
identifying dynamic information related to a power receiving surface that corresponds to a power receiving unit included in a target power reception apparatus;
identifying static information related to the power receiving surface;
generating a control parameter related to a radiation direction and a beam shape of a power transmission beam for supplying electrical power to the target power reception apparatus by referring to the dynamic information related to the power receiving surface and the static information related to the power receiving surface;
causing a power transmission apparatus that performs wireless power transmission to radiate the power transmission beam in accordance with the control parameter;
referring to a position of an edge in an image obtained by photographing a periphery of the target power reception apparatus and monitoring entry of a biological body or an object with respect to a no-entry region that is created in a periphery of a path of the power transmission beam; and
stopping radiation of the power transmission beam when entry of a biological body or an object with respect to the no-entry region is detected.

13. A power transmission control program causing a computer to function as:
means for identifying dynamic information related to a power receiving surface that corresponds to a power receiving unit included in a target power reception apparatus;
means for identifying static information related to the power receiving surface;
means for generating a control parameter related to a radiation direction and a beam shape of a power transmission beam for supplying electrical power to the target power reception apparatus by referring to the dynamic information related to the power receiving surface and the static information related to the power receiving surface;
means for causing a power transmission apparatus that performs wireless power transmission to radiate the power transmission beam in accordance with the control parameter;
means for referring to a position of an edge in an image obtained by photographing a periphery of the target power reception apparatus and monitoring entry of a biological body or an object with respect to a no-entry region that is created in a periphery of a path of the power transmission beam; and
means for stopping radiation of the power transmission beam when entry of a biological body or an object with respect to the no-entry region is detected.

14. A power transmission control apparatus, comprising:
means for identifying dynamic information related to a power receiving surface that corresponds to a power receiving unit included in a target power reception apparatus;
means for identifying static information related to the power receiving surface;
means for generating a control parameter related to a radiation direction and a beam shape of a power transmission beam for supplying electrical power to the target power reception apparatus by referring to the dynamic information related to the power receiving surface and the static information related to the power receiving surface;
means for causing a power transmission apparatus that performs wireless power transmission to radiate the power transmission beam in accordance with the control parameter;
means for referring to a position of an edge in an image obtained by photographing a periphery of the target power reception apparatus and monitoring entry of a biological body or an object with respect to a no-entry region that is created in a periphery of a path of the power transmission beam; and
means for stopping radiation of the power transmission beam when entry of a biological body or an object with respect to the no-entry region is detected.

15. A wireless power supply system, comprising:
the power transmission control apparatus according to claim 14; and
at least one power transmission apparatus.
